(19) **Europäisches Patentamt / European Patent Office / Office européen des brevets**

(11) **EP 4 521 812 A1**

(12) **EUROPEAN PATENT APPLICATION**
published in accordance with Art. 153(4) EPC

(43) Date of publication:
**12.03.2025 Bulletin 2025/11**

(21) Application number: **23802608.2**

(22) Date of filing: **20.04.2023**

(51) International Patent Classification (IPC):
**H04W 24/10** (2009.01)    **H04B 17/382** (2015.01)

(52) Cooperative Patent Classification (CPC):
**H04B 17/382; H04L 9/40; H04L 43/04; H04L 43/08; H04L 47/80; H04L 49/35; H04W 24/10**

(86) International application number:
**PCT/CN2023/089524**

(87) International publication number:
**WO 2023/216833 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.05.2022 CN 202210522774**

(71) Applicant: **Huawei Technologies Co., Ltd.**
**Shenzhen, Guangdong 518129 (CN)**

(72) Inventors:
• **ZHOU, Baojian**
  **Shenzhen, Guangdong 518129 (CN)**

• **LUO, Jiajin**
  **Shenzhen, Guangdong 518129 (CN)**
• **PENG, Xiaohui**
  **Shenzhen, Guangdong 518129 (CN)**
• **YAN, Min**
  **Shenzhen, Guangdong 518129 (CN)**
• **YANG, Xun**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

(54) **PERCEPTION METHOD, COMMUNICATION APPARATUS AND COMPUTER-READABLE STORAGE MEDIUM**

(57) This application provides a sensing method, a communication apparatus, and a computer-readable storage medium. A network device sends a first measurement requirement to a terminal device, and then the terminal device determines, based on the first measurement requirement, whether sensing parameter measurement needs to be performed on a target object. The terminal device performs the sensing parameter measurement and obtains a sensing parameter measurement result of the target object, only when the terminal device needs to perform the sensing parameter measurement. Finally, the terminal device participating in the sensing parameter measurement sends the sensing parameter measurement result to the network device. According to the method provided in this application, only a terminal device that meets the first measurement requirement can perform sensing parameter measurement on the target object. Therefore, data quality of the sensing parameter measurement result obtained in this case is high. In addition, because not all terminal devices participate in the sensing parameter measurement, a waste of a communication resource is avoided.

**(Cont. next page)**

400

```
┌──────────┐        ┌──────────┐        ┌──────────┐
│ Network  │        │  First   │        │  Second  │
│  device  │        │ terminal │        │ terminal │
│          │        │  device  │        │  device  │
└────┬─────┘        └────┬─────┘        └────┬─────┘
```

S410: Send a
measurement type

S420a: Send a first
measurement requirement,
where the first measurement
requirement is used by a
plurality of terminal devices to
determine whether to perform
sensing parameter
measurement on a target object

S420b: Send the first
measurement requirement

| S430a: Receive the first measurement requirement, and determine, based on the first measurement requirement, whether to perform the sensing parameter measurement on the target object | S430b: Receive the first measurement requirement, and determine, based on the first measurement requirement, whether to perform the sensing parameter measurement on the target object |
|---|---|
| S440a: When determining that the sensing parameter measurement needs to be performed, obtain a first sensing parameter measurement result of the target object | S440b: When determining that the sensing parameter measurement needs to be performed, obtain a second sensing parameter measurement result of the target object |

S450a: Send the first
sensing parameter
measurement result

S450b: Send the second
sensing parameter
measurement result

S460: Send all the sensing
parameter measurement results

FIG. 4

## Description

This application claims priority to Chinese Patent Application No. 202210522774.5, filed with the China National Intellectual Property Administration on May 13, 2022 and entitled "SENSING METHOD, COMMUNICATION APPARATUS, AND COMPUTER-READABLE STORAGE MEDIUM", which is incorporated herein by reference in its entirety.

## TECHNICAL FIELD

This application relates to the field of integrated sensing and communication technologies, and in particular, to a sensing method, a communication apparatus, and a computer-readable storage medium.

## BACKGROUND

With development of network technologies, a base station may implement, by using a communication signal, sensing functions such as detection, positioning, identification, and imaging of a target object by a plurality of terminal devices. A wireless communication system including the base station and the plurality of terminal devices may obtain ambient environment information by using the sensing functions, to intelligently and accurately allocate a communication resource, explore a potential communication capability, and improve user experience.

Integrated sensing and communication is one of the hot topics for research on potential key technologies of 5G/6G. The design concept of the integrated sensing and communication is to enable wireless communication and wireless sensing, two independent functions, to be implemented and to benefit from each other in a same system. A communication system may use a same spectrum or even reuse hardware or a signal processing module to complete different types of sensing services. In addition, a sensing result may be used to assist in communication access or management, thereby improving service quality and communication efficiency.

However, in a current communication and sensing system, when a sensing system including a network device and a plurality of terminal devices performs sensing measurement on a target object, the plurality of terminals participate in the measurement and the terminals work independently. Consequently, sensing measurement precision is low, and a communication resource is wasted.

## SUMMARY

This application provides a sensing method, a communication apparatus, and a computer-readable storage medium. Terminal devices to participate in sensing parameter measurement are filtered, to resolve a problem of a sensing measurement performance loss, and improve data quality of the sensing parameter measurement.

According to a first aspect, a sensing method is provided. The method may be performed by a terminal device or by a chip used in the terminal device. The method includes: determining a first measurement requirement; determining, based on the first measurement requirement, whether to perform sensing parameter measurement on a target object; when determining that the sensing parameter measurement needs to be performed, obtaining a sensing parameter measurement result of the target object; and sending the sensing parameter measurement result.

According to the sensing method provided in the first aspect, terminal devices to perform the sensing parameter measurement on the target object are filtered based on the first measurement requirement, and only a terminal device that meets the measurement requirement can perform the sensing parameter measurement on the target object. In this case, data quality of a sensing parameter measurement result obtained through measurement is high, and performance of target object sensing is ensured.

For example, the first measurement requirement may be prestored by the terminal device, or may be sent by a network device to the terminal device, or may certainly be sent by one or more other terminal devices. This is not limited in this application.

Alternatively, the first measurement requirement may be sent by one or more terminal devices to a network device, and then forwarded or combined and forwarded by the network device to the terminal device. Alternatively, another terminal device may receive the first measurement requirement from a network device and one or more terminal devices, and then send the first measurement requirement to the terminal device. Certainly, the first measurement requirement may alternatively be simultaneously sent by a network device and one or more terminal devices. In a possible implementation of the first aspect, before the sensing parameter measurement result is sent, the method further includes: determining, based on a data transmission requirement, whether to send the sensing parameter measurement result; and when determining that the sensing parameter measurement result needs to be sent, sending the sensing parameter measurement result. In this implementation, the terminal device participating in the sensing parameter measurement determines, based on the data transmission requirement, whether to send the sensing parameter measurement result. This manner of filtering sensing parameter measurement results can reduce data redundancy and utilization of air interface resources, and reduce data storage pressure and data processing complexity at a data receiving end.

For example, the data transmission requirement may be prestored by the terminal device, or may be sent by the network device to the terminal device, or may certainly be sent by another terminal device. This is not limited in this application.

For example, the data transmission requirement includes an index or an identifier of the data transmission requirement. In this implementation, by using a set index, a requirement for a lower delay can be met in a real-time sensing scenario, and control overheads of an air interface are greatly reduced.

For example, the first measurement requirement includes an index or an identifier of the first measurement requirement. In this implementation, by using a set index, a requirement for a lower delay can be met in a real-time sensing scenario, and control overheads of an air interface are greatly reduced.

For example, the first measurement requirement includes at least one of a performance indicator of a sensing parameter or a range of a status parameter of the terminal device.

For example, the sensing parameter includes at least one of a distance, a velocity, an angle, a synthetic aperture radar SAR image, or an inverse synthetic aperture radar ISAR image.

For example, the performance indicator of the sensing parameter includes at least one of resolution, precision, a blur range, a peak side lobe ratio PSLR, or an integrated side lobe ratio ISLR.

For example, the range of the status parameter of the terminal device includes at least one of a frequency range, a bandwidth range, an antenna quantity range, an antenna aperture size range, a signal dynamic range, an analog-to-digital converter ADC/digital-to-analog converter DAC bit quantity range, a noise floor range, a clock stability range, a location range of the terminal device, a velocity range of the terminal device, or a situation of a target around the terminal device

For example, the situation of the target around the terminal device includes at least one of whether the target object is present around the terminal device, a quantity of target objects, or a distance between the target object and the terminal device.

For example, the data transmission requirement includes at least one of a signal to interference plus noise ratio SINR requirement, a signal-to-noise ratio SNR requirement, a line of sight LOS and non-line of sight NLOS power ratio requirement, a sampling moment requirement, or a sampling location requirement for measuring the sensing parameter.

In a possible implementation of the first aspect, when the first measurement requirement includes the performance indicator of the sensing parameter, the determining, based on the first measurement requirement, whether to perform sensing parameter measurement on a target object includes: determining performance of the sensing parameter of the terminal device based on the status parameter of the terminal device; and when the performance of the sensing parameter of the terminal device meets the performance indicator of the sensing parameter, performing the sensing parameter measurement on the target object. In this implementation, the performance of the sensing parameter of the terminal device may be quickly obtained according to a calculation formula by using the status parameter of the terminal device, to further determine whether the performance of the sensing parameter of the terminal device obtained through calculation meets the performance indicator of the sensing parameter.

In a possible implementation of the first aspect, when the first measurement requirement includes the range of the status parameter of the terminal device, the determining, based on the first measurement requirement, whether to perform sensing parameter measurement on a target object includes: when at least one of a frequency of the terminal device, a bandwidth, an antenna quantity, an antenna aperture, the signal dynamic range, an ADC/DAC bit quantity, noise floor, clock stability, a location of the terminal device, a velocity of the terminal device, or the situation of the target around the terminal device falls within the range of the status parameter of the terminal device, performing the sensing parameter measurement on the target object. In this implementation, it can be visually determined whether the status parameter of the terminal device falls within the range of the status parameter of the terminal device, to further determine whether the terminal device can perform the sensing parameter measurement.

In a possible implementation of the first aspect, before the first measurement requirement is determined, the method further includes: sending a second measurement requirement, where the second measurement requirement indicates a sensing measurement capability of the terminal device; and the determining, based on the first measurement requirement, whether to perform sensing parameter measurement on a target object includes: determining, based on the first measurement requirement and the second measurement requirement, whether to perform the sensing parameter measurement on the target object. In this implementation, the sensing measurement capability of the terminal device may be learned based on the second measurement requirement, and then the first measurement requirement is delivered based on the sensing measurement capability, instead of sending the first measurement requirement to all terminal devices. Therefore, this implementation can improve precision of the sensing parameter measurement result while reducing a waste of an air interface resource.

In a possible implementation of the first aspect, a measurement type of the target object is sent, where the measurement type includes at least one of ranging, velocity measurement, angle measurement, SAR imaging, or ISAR imaging.

According to a second aspect, a sensing method is provided. The method may be performed by a network device or by a chip used in the network device. The method includes: sending a first measurement requirement to one or more terminal devices, where the first measurement requirement is used by the one or more terminal devices to determine whether to perform sensing parameter measurement on a target object; and receiving a sensing parameter measurement result sent by at least one target terminal device, where the at least one target terminal device is a terminal device that performs the sensing parameter measurement in the one or more terminal devices. According to the joint sensing method provided in the second aspect, the first measurement requirement is sent to the terminal device, so that the terminal device can determine, based on the first measurement requirement, whether to participate in the sensing parameter measurement, and then the sensing parameter measurement result sent by a terminal device that meets the measurement requirement is received. In this case, data quality of the received sensing parameter measurement result is high, and performance of target object sensing is ensured.

In a possible implementation of the second aspect, before the sensing parameter measurement result sent by the at least one target terminal device is received, the method further includes: sending a data transmission requirement to the one or more terminal devices, where the data transmission requirement is used by the terminal device that performs the sensing parameter measurement in the one or more terminal devices to determine whether to send the sensing parameter measurement result; and the receiving a sensing parameter measurement result sent by at least one target terminal device includes: receiving the sensing parameter measurement result sent by a first target terminal device, where the first target terminal device is at least one terminal device in the one or more target terminal devices. In this implementation, the data transmission requirement is sent to the terminal device, so that the terminal device participating in the sensing parameter measurement can determine, based on the data transmission requirement, whether the terminal device needs to send the sensing parameter measurement result, and then the sensing parameter measurement result sent by the terminal device that meets the data transmission requirement is received. In this case, data redundancy and utilization of air interface resources can be reduced, and data storage pressure and data processing complexity are reduced.

For example, the data transmission requirement includes an index or an identifier of the data transmission requirement. In this implementation, by using a set index, a requirement for a lower delay can be met in a real-time sensing scenario, and control overheads of an air interface are greatly reduced.

For example, the first measurement requirement includes an index or an identifier of the first measurement requirement. In this implementation, by using a set index, a requirement for a lower delay can be met in a real-time sensing scenario, and control overheads of an air interface are greatly reduced.

For example, the first measurement requirement includes at least one of a performance indicator of a sensing parameter or a range of a status parameter of the terminal device.

For example, the sensing parameter includes at least one of a distance, a velocity, an angle, a SAR image, or an ISAR image.

For example, the performance indicator of the sensing parameter includes at least one of resolution, precision, a blur range, a peak side lobe ratio PSLR, or an integrated side lobe ratio ISLR.

For example, the range of the status parameter of the terminal device includes at least one of a frequency range, a bandwidth range, an antenna quantity range, an antenna aperture size range, a signal dynamic range, an ADC/DAC bit quantity range, a noise floor range, a clock stability range, a location range of the terminal device, a velocity range of the terminal device, or a situation of a target around the terminal device

For example, the situation of the target around the terminal device includes at least one of whether the target object is present around the terminal device, a quantity of target objects, or a distance between the target object and the terminal device.

For example, the data transmission requirement includes at least one of an SINR requirement, an SNR requirement, a LOS and NLOS power ratio requirement, a sampling moment requirement, or a sampling location requirement for measuring the sensing parameter.

In a possible implementation of the second aspect, the method further includes: receiving a second measurement requirement sent by a first terminal device; and the sending a first measurement requirement to one or more terminal devices includes: sending the first measurement requirement to the at least one terminal device based on the second measurement requirement, where the first terminal device is any one of the one or more terminal devices. In this implementation, a sensing measurement capability of the first terminal device may be learned by receiving the second measurement requirement sent by the first terminal device, and then whether the first measurement requirement needs to be sent to the first terminal device is determined based on the sensing measurement capability. This implementation can improve precision of the sensing parameter measurement result while reducing a waste of an air interface resource.

In a possible implementation of the second aspect, the sending a first measurement requirement to one or more terminal devices includes: sending the first measurement requirement to the one or more terminal devices in at least one of a broadcast manner, a multicast manner, or a unicast manner.

According to a third aspect, a communication apparatus is provided. The communication apparatus includes a unit configured to perform each step in any one of the first aspect or the possible implementations of the first aspect, or a unit configured to perform each step in any one of the second aspect or the possible implementations of the second aspect.

According to a fourth aspect, a communication apparatus is provided. The communication apparatus includes at least one processor and a memory, the processor is coupled to the memory, and the memory stores program instructions. When the program instructions stored in the memory are executed by the processor, the method in any one of the first aspect or the possible implementations of the first aspect is performed, or the method in any one of the second aspect or the possible implementations of the second aspect is performed.

Optionally, the communication apparatus in the fourth aspect further includes at least one memory. According to a fifth aspect, a communication apparatus is provided. The communication apparatus includes at least one processor and an interface circuit. The at least one processor is configured to perform the method in any one of the first aspect or the possible implementations of the first aspect, or the method in any one of the second aspect or the possible implementations of the second aspect. According to a sixth aspect, a terminal device is provided. The terminal device includes the communication apparatus provided in the third aspect, or the terminal device includes the communication apparatus provided in the fourth aspect, or the terminal device includes the communication apparatus provided in the fifth aspect.

According to a seventh aspect, a network device is provided. The network device includes the communication apparatus provided in the third aspect, or the network device includes the communication apparatus provided in the fourth aspect, or the network device includes the communication apparatus provided in the fifth aspect.

According to an eighth aspect, a computer program product is provided. The computer program product includes a computer program. When the computer program is executed by a processor, the computer program is used to perform the method in any one of the first aspect or the possible implementations of the first aspect, or perform the method in any one of the second aspect or the possible implementations of the second aspect.

According to a ninth aspect, a computer-readable storage medium is provided. The computer-readable storage medium stores a computer program. When the computer program is executed, the computer program is used to perform the method in any one of the first aspect or the possible implementations of the first aspect, or perform the method in any one of the second aspect or the possible implementations of the second aspect.

According to a tenth aspect, a chip is provided. The chip includes a processor, configured to invoke a computer program from a memory and run the computer program, to enable a communication device in which the chip is installed to perform the method in any one of the first aspect or the possible implementations of the first aspect, or perform the method in any one of the second aspect or the possible implementations of the second aspect.

According to an eleventh aspect, a communication system is provided. The communication system includes the foregoing terminal device and the foregoing network device.

## BRIEF DESCRIPTION OF DRAWINGS

FIG. 1 is a diagram of a relationship between various performance indicators of common sensing parameters and a target object, a system, and an environmental factor;

FIG. 2 is a diagram of a scenario of multi-terminal joint measurement in a conventional technology;

FIG. 3 is a diagram of an environmental imaging system that is based on a cellular communication network;

FIG. 4 is an interaction diagram of an example of a multi-terminal joint sensing method according to an embodiment of this application;

FIG. 5A and FIG. 5B are an interaction diagram of another example of a multi-terminal joint sensing method according to an embodiment of this application;

FIG. 6A and FIG. 6B are an interaction diagram of still another example of a multi-terminal joint sensing method according to an embodiment of this application;

FIG. 7 is a diagram of a hardware structure of an example of a terminal device 700 according to this application;

FIG. 8 is a schematic block diagram of another example of a communication apparatus 800 according to an embodiment of this application;

FIG. 9 is a diagram of a structure of a network device 900 according to an embodiment of this application; and

FIG. 10 is a diagram of a chip system according to an embodiment of this application.

## DESCRIPTION OF EMBODIMENTS

The following clearly and completely describes the technical solutions in embodiments of this application with reference to the accompanying drawings in embodiments of this application.

The terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that, in embodiments of this application, "one or more" refers to one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized. The terms "include", "have", and their variants all mean "include but are not limited to", unless otherwise specifically emphasized.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

The technical solutions of embodiments of this application may be applied to various communication systems, such as a global system for mobile communications (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system or a new radio (New Radio, NR) system, and various wireless communication systems in the future.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

Currently, 5G is evolving toward to 6G in terms of computing and services. Service elements are expanded from people to intelligent agents, and physical space and virtual space elements. Information processing function requirements are expanded from information transfer to information collection and information computing. AI services, immersive services, and digital twin services are penetrating into a broad range of vertical application fields. Emerging services pose a higher requirement on an end-to-end information processing capability of a 6G network, making integrated sensing and communication one of the leading trends of 6G technologies and services.

The integrated sensing and communication (integrated sensing and communication, ISAC) enables a system to support both communication and sensing functions through joint design. Compared with a communication system and a sensing system that are separated from each other, the ISAC has advantages in size, weight, power consumption, costs, efficiency, and the like.

It may be understood that communication is information transmission between two or more points, and sensing is detection of a parameter of a physical environment, for example, velocity measurement and target positioning. In other words, the integrated sensing and communication means that the two functions of communication and sensing are integrated, so that a future communication system has both the communication and sensing functions. During information transmission over a radio channel, a feature of the channel is proactively perceived and analyzed. In this way, a physical feature of an ambient environment is sensed, so that a communication function and a sensing function can enhance each other.

From 1G to 5G, communication and sensing are independent of each other. For example, a 4G communication system is responsible only for communication, and a radar system is responsible only for functions such as velocity measurement and induction imaging. This independence leads to a waste of wireless spectra and hardware resources, and the mutual independence of functions may result in a high information processing delay.

With the advent of the 6G era, communication spectra develop toward millimeter waves and terahertz. In the future, the communication spectra will overlap with traditional sensing spectra. Therefore, new technologies need to be studied to explore fusion of the communication spectra and the traditional sensing spectra. The integrated sensing and communication can facilitate joint scheduling of communication and sensing resources.

First, related factors in sensing measurement are described in detail.

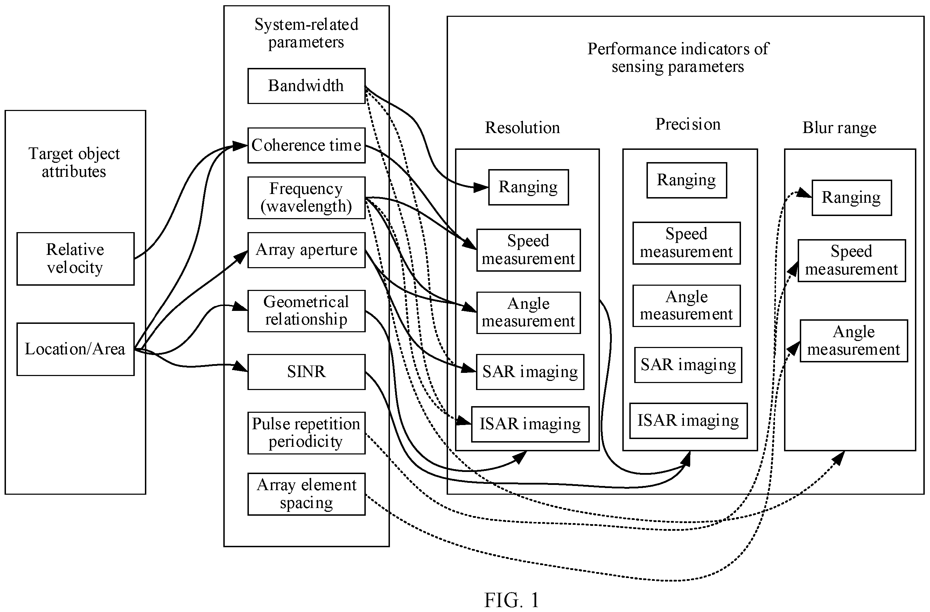

Sensing parameters include a distance, a velocity, an angle, a synthetic aperture radar (synthetic aperture radar, SAR) imaging result, an inverse synthetic aperture radar (inverse synthetic aperture radar, ISAR) imaging result, or the like. Corresponding sensing parameter measurement forms include ranging, velocity measurement, angle measurement, SAR imaging, ISAR imaging, or the like. Each measurement form has a corresponding performance indicator. For example, a performance indicator of ranging includes resolution, precision, a blur range, or the like. Measurement performance of a sensing measurement task is related to a system including a target object, a base station, and a terminal device, and an environmental factor. FIG. 1 is a diagram of a relationship between various performance indicators of common sensing parameters and a target object, a system, and an environmental factor. As shown in FIG. 1, the performance indicators of the sensing parameters include: resolution of ranging, resolution of velocity measurement, resolution of angle measurement, resolution of SAR imaging, and resolution of ISAR imaging; precision of ranging, precision of velocity measurement, precision of angle measurement, precision of SAR imaging, and precision of ISAR imaging; and a blur range of ranging, a blur range of velocity measurement, and a blur range of angle measurement. The performance indicators of the sensing parameters may further include a peak side lobe ratio (peak side lobe ratio, PSLR) of ranging, a PSLR of velocity measurement, a PSLR of angle measurement, a PSLR of SAR imaging, and a PSLR of ISAR imaging; an integrated side lobe ratio (integrated side lobe ratio, ISLR) of ranging, an ISLR of velocity measurement, an ISLR of angle measurement, an ISLR of SAR imaging, and an ISLR of ISAR imaging. Certainly, the performance indicators of the sensing parameters may further include another parameter, and the example shown in FIG. 1 constitutes no limitation thereto.

It can be further learned from FIG. 1 that the performance indicator of the sensing parameter is affected by a system-related parameter. For example, the resolution of ranging is affected by a system bandwidth, and the resolution of velocity measurement is affected by system coherence time and a frequency (wavelength). The system-related parameter is affected by an attribute of a target object. For example, the system coherence time is affected by a moving velocity (relative velocity) of the target object relative to a transceiver, and a location of the target object or an area in which the target object is located.

It should be noted that, in addition to the bandwidth, the coherence time, the frequency, an array aperture, a geometrical relationship, an SINR, a pulse repetition periodicity, and an array element spacing, the system-related parameter may further include another parameter. In addition to the relative velocity and the location/area, the attribute of the target object may further include another parameter. This is not limited in embodiments of this application.

In an evolved ISAC network based on an existing cellular communication system, a base station (base station, BS) may request a plurality of terminal devices (user equipments, UEs) to measure a passive target object. For a sensing parameter measurement task, because different UEs have different status parameters, and the different status parameters affect a sensing parameter measurement result, effects of the different UEs participating in sensing parameter measurement are different.

It should be noted that the passive target object described in this application may be a target object that cannot receive or send a signal. For example, the target object may be a building, a pedestrian, or the like.

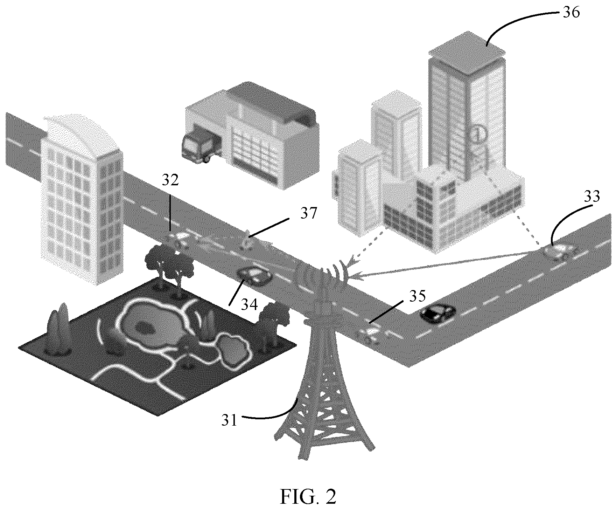

For example, with reference to FIG. 2, a method for using a terminal device to perform sensing parameter measurement on a target object in a conventional technology is specifically described. FIG. 2 is a diagram of a scenario of multi-terminal joint measurement in a conventional technology. As shown in FIG. 2, the scenario includes a base station 31; a terminal device 32, a terminal device 33, and a terminal device 35 that are configured to sense a target object; and a target object 34, a target object 36, and a target object 37. For example, the terminal device 32, the terminal device 33, and the terminal device 35 are vehicles, the target object 36 is a building, the target object 37 is a pedestrian moving at a low velocity, and the target object 34 is a vehicle moving at a high velocity.

For example, for static environmental imaging, to be specific, in a measurement system including the base station 31, the terminal device 33, and the target object 36, the terminal device 33 needs to perform measurement at a proper location to form a proper virtual array. In addition, to ensure plenty of coherence time, the terminal device 33 cannot be excessively fast.

For example, in a measurement system including the base station 31, the terminal device 32, and the target object 37, because the target object is a target object with a low velocity and a small radar cross section (radar cross section, RCS), when performing velocity measurement and ranging, the terminal device 32 needs to be located at an area close to the target object 37, to ensure a sufficient signal-to-noise ratio (signal-to-noise ratio, SNR). In addition, to ensure plenty of coherence time, a relative velocity between the terminal device 32 and the target object 37 needs to be low, that is, a moving velocity of the terminal device 32 needs to be low.

For example, in a system including the target object 34 and the terminal device 35, because the target object 34 is an object moving at a high velocity, to measure a velocity of the target object 34, the terminal device 35 needs to be close to a movement direction of the target object, so that a radial velocity of the target object 34 can be measured. In addition, a relative moving velocity between the terminal device 35 and the target object 34 needs to be low, that is, the terminal device 35 needs to travel at a high velocity, to ensure plenty of correlation time.

In conclusion, when scheduling a plurality of terminals to perform joint sensing, to ensure validity of a measurement result, a base station needs to select an appropriate terminal device to participate in sensing parameter measurement of a target object.

In a conventional technology, when detection on a static target object or a dynamic target object in an environment is performed based on a conventional radar, the radar is independent of another radar and works independently. For example, a radar system in a vehicle is independent of another radar system and works independently. Because radar systems are independent of each other, a plurality of terminals cannot be coordinated to perform joint sensing, leading to a problem of measurement coverage in a sensing implementation process. Because status parameters of terminal devices are different, precision of sensing parameters obtained through measurement is also different. In addition, when the plurality of terminals perform measurement synchronously, there is a problem of interference between the plurality of terminals.

In a conventional technology, detection on a static target object and a dynamic target object in an environment may further be performed based on a cellular communication network. A basic principle of performing sensing and detection on a target object by using the cellular communication network is to sense the target object by using an uplink or downlink communication signal and a signal processing algorithm. The communication signal includes a reference signal and a data part. When detecting performance of target object sensing based on the cellular communication network, although the base station may schedule a plurality of UEs present in the network, each UE participates in measurement independently, and the base station does not coordinate or select from the plurality of UEs based on a measurement requirement. It may be understood that, when the base station cannot select from the plurality of UEs based on the measurement requirement, terminal devices with various performance may participate in the sensing parameter measurement. Therefore, quality of a result obtained through measurement cannot be ensured. In addition, when the base station cannot coordinate the plurality of UEs, measurement data missing or redundancy may occur.

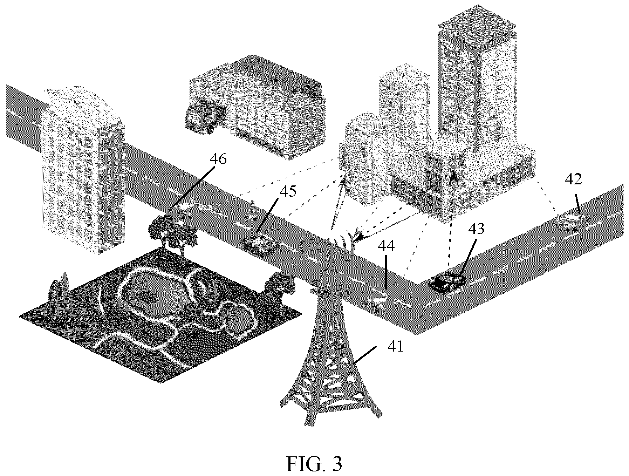

The following uses FIG. 3 as an example to describe in detail sensing measurement performed on a target object in an environment based on a cellular communication network in a conventional technology. FIG. 3 is a diagram of an environmental imaging system that is based on a cellular communication network. As shown in FIG. 3, in the system, each vehicle accessing the network is viewed as a terminal device that performs sensing parameter measurement on a target object. To be specific, a base station 41, a vehicle 42, a vehicle 43, a vehicle 44, a vehicle 45, and a vehicle 46 form a sensing parameter measurement system. In a process in which each vehicle sends a signal to the base station or receives a signal sent by the base station along a road, imaging is performed on a building environment around the road.

In an ideal case, to ensure imaging quality, each road may be divided into a plurality of segments with an equal length of an order of magnitude for a signal wavelength. A vehicle sends or receives a signal for one time at the center of each segment. However, in an existing cellular communication network architecture, the BS only notifies a UE to perform measurement, but the BS does not notify the UE of a location at which the UE should perform the measurement, and the UE does not know a measurement status of another UE. Therefore, in this case, a measurement location of the UE is improper, and measurement missing or repetition occurs. Because the base station does not filter terminal devices based on terminal statuses, quality of measurement data that is sent by the UE and that is obtained by the base station cannot be ensured, and measurement data missing or redundancy may also occur, thereby reducing imaging quality.

To sum up, in the field of integrated sensing and communication, the following issues deserve attention: how to resolve a problem of a sensing measurement performance loss caused because a base station does not filter terminal devices in a multi-terminal joint sensing scenario, and how to resolve a problem of measurement data redundancy or missing caused because a plurality of terminal devices perform sensing parameter measurement independently of each other.

In view of this, this application provides a multi-terminal joint sensing method. The method includes: A base station first sends a measurement requirement to a plurality of terminal devices. The plurality of terminal devices receive the measurement requirement and determine, based on the measurement requirement, whether sensing parameter measurement needs to be performed on a target object. The terminal device performs the sensing parameter measurement and obtains a sensing parameter measurement result of the target object, only when determining that the sensing parameter measurement needs to be performed. Finally, the terminal device that performs the sensing parameter measurement sends the sensing parameter measurement result to the base station. According to the method provided in this application, the base station sends the measurement requirement to the terminal device, and only a terminal device that meets the measurement requirement performs the sensing parameter measurement on the target object. In this case, data quality of the obtained sensing parameter measurement result is high. In addition, because not all terminal devices participate in the sensing parameter measurement, a waste of a communication resource is avoided.

For example, in a possible application scenario, when a network device needs to use a plurality of terminal devices to perform static imaging on buildings on two sides of a road, the multi-terminal joint sensing method provided in embodiments of this application may be used.

For example, in another possible application scenario, when a network device needs to use a plurality of terminal devices to measure distances between a pedestrian moving at a low velocity and the plurality of terminal devices, the multi-terminal joint sensing method provided in embodiments of this application may be used.

For example, in still another possible application scenario, when a network device needs to use a plurality of terminal devices to measure a velocity of a vehicle moving at a high velocity, the multi-terminal joint sensing method provided in embodiments of this application may be used.

For example, the multi-terminal joint sensing method provided in embodiments of this application may be further applied to the scenario shown in FIG. 2 or FIG. 3, and certainly, may be further applied to another communication scenario. This is not limited in embodiments of this application. The terminal device in embodiments of this application may be a user equipment, an access terminal, a subscriber unit, a subscriber station, a mobile station, a remote station, a remote terminal, a mobile device, a user terminal, a terminal, a wireless communication device, a user agent, a user apparatus, or the like. Alternatively, the terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or another processing device connected to a wireless modem, a vehicle-mounted device, a wearable device, a terminal device in a 5G network, a terminal device in a future evolved public land mobile network (Public Land Mobile Network, PLMN), or the like. A type of the terminal device (for example, a mobile phone, a tablet computer, or a large-screen device) is not specifically limited in embodiments of this application. In some embodiments, the terminal device in embodiments of this application may be a mobile phone, a wearable device (for example, a smart band, a smartwatch, or a headset), a tablet computer, a laptop computer (laptop), a handheld computer, a notebook computer, an ultra-mobile personal computer (ultra-mobile personal computer, UMPC), a cellular phone, a personal digital assistant (personal digital assistant, PDA), an uncrewed aerial vehicle, an augmented reality (Augmented reality, AR)/virtual reality (virtual reality, VR) device, or the like. Alternatively, the terminal device may be a television, a large screen, a speaker, a television set, a refrigerator, an air conditioner, a vehicle-mounted device, a printer, a projector, or the like. Alternatively, the terminal device may be a smart speaker, a vehicle-mounted device (which may also be referred to as a head unit), a connected vehicle, a pole station, a notebook computer, an ultra-mobile personal computer (ultra-mobile personal computer, UMPC), a handheld computer, a netbook, a personal digital assistant (personal digital assistant, PDA), a wearable electronic device, an IoT (internet of things, internet of things) device like a virtual reality device, or the like. An example embodiment of the terminal device includes but is not limited to a terminal device powered by iOS®, Android®, Microsoft®, Harmony, or another operating system. The network device in embodiments of this application may be a device used to communicate with the terminal device. The network device may be a base transceiver station (base transceiver station, BTS) in a global system for mobile communications (Global System of Mobile communication, GSM) or a code division multiple access (Code Division Multiple Access, CDMA) system; may be a NodeB (NodeB, NB) in a wideband code division multiple access (Wideband Code Division Multiple Access, WCDMA) system; may be an evolved NodeB (Evolved NodeB, eNB or eNodeB) in an LTE system; or may be a radio controller in a cloud radio access network (Cloud Radio Access Network, CRAN) scenario. Alternatively, the network device may be a satellite, a relay station, an access point, a vehicle-mounted device, a wearable device, a network device in a 5G network, a network device in a future evolved PLMN network, a network device in another type of future communication system, or the like. This is not limited in embodiments of this application. In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

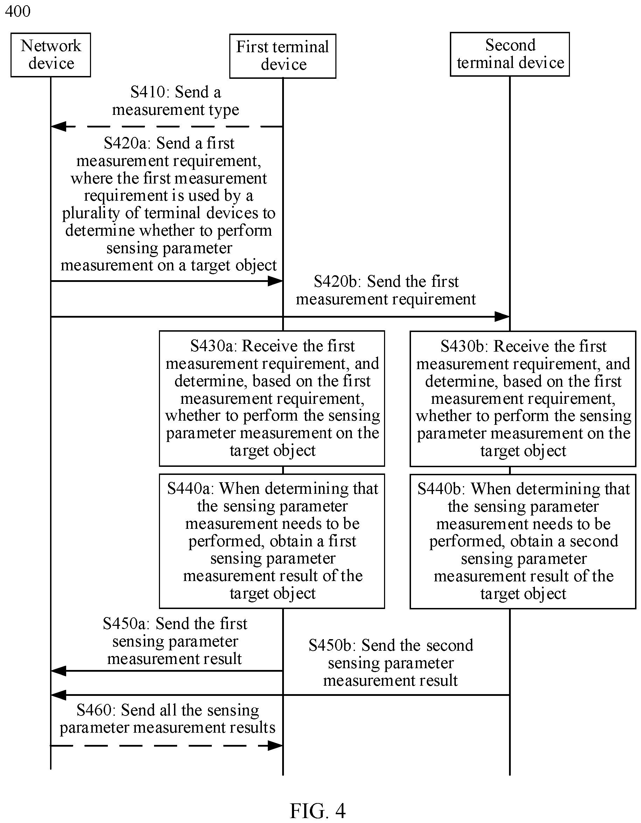

The following describes in detail the multi-terminal joint sensing method provided in this application with reference to FIG. 4. FIG. 4 is an interaction diagram of an example of a multi-terminal joint sensing method according to an embodiment of this application. The method may be applied to the foregoing scenarios, or certainly may be applied to another sensing and communication scenario. This is not limited in this embodiment of this application.

It should be understood that in this embodiment of this application, the method is described by using an example in which the method is performed by a terminal device and a network device. By way of example and not limitation, the method may alternatively be performed by chips, chip systems, processors, or the like used in the terminal device and the network device.

As shown in FIG. 4, a method 400 shown in FIG. 4 may include S410 to S460. The following describes in detail each step in the method 400 with reference to FIG. 4.

S410: A first terminal device sends a measurement type of a target object to the network device, where the measurement type includes at least one of ranging, velocity measurement, angle measurement, SAR imaging, or ISAR imaging.

In this embodiment of this application, the first terminal device may send the measurement type of the target object to the network device based on a measurement requirement of the first terminal device. The measurement type of the target object indicates that measurement types of a plurality of terminal devices are needed.

For example, the measurement type of the target object is a distance that is between the first terminal device and the target object and that the first terminal device wants to obtain, or a relative velocity that is between the target object and the first terminal device and that the first terminal device wants to obtain. In this case, the first terminal device may send a ranging task or a velocity measurement task to the network device.

It should be noted that step S410 is an optional step. Alternatively, the first terminal device may not send the measurement type to the network device, or a second terminal device or another terminal device may send the measurement type to the network device. This is not limited in this embodiment of this application.

S420a: The network device sends a first measurement requirement to the first terminal device.

S420b: The network device sends the first measurement requirement to the second terminal device. In this embodiment of this application, to improve performance of a sensing parameter measurement result, the network device may separately send the first measurement requirement to the first terminal device and the second terminal device. The first measurement requirement is used by the plurality of terminal devices to determine whether the plurality of terminal devices meet the measurement requirement. When a terminal device meets the measurement requirement, the terminal device may perform sensing parameter measurement on the target object.

It should be understood that the first terminal device and the second terminal device are used as an example in steps S420a and S420b. Certainly, the network device may further send the first measurement requirement to more terminal devices. A quantity of terminal devices that receive the first measurement requirement is not limited in this embodiment of this application.

It should be further understood that the network device may simultaneously send the first measurement requirement to the first terminal device and the second terminal device in a broadcast manner. When the first terminal device and the second terminal device are in a same group, the network device may further send the first measurement requirement to the first terminal device and the second terminal device in a multicast manner. Alternatively, the network device may separately send the first measurement requirement to the first terminal device and the second terminal device in a unicast manner. In the unicast manner, the first measurement requirement may be sent in a same time period, or may be sent in different time periods. A manner in which the network device sends the first measurement requirement to the plurality of terminal devices is not limited in this embodiment of this application.

It should be noted that the target object mentioned in this embodiment of this application may be a static object, for example, a building, the ground, or a plant. Alternatively, the target object may be a dynamic object, for example, a vehicle or a train. Alternatively, the target object may be a person, a pet, or the like. Certainly, the target object may alternatively be another object. This is not limited in this embodiment of this application.

Optionally, in this embodiment of this application, a terminal device that meets the measurement requirement in the plurality of terminal devices may be referred to as a target terminal device.

In some embodiments, the network device may deliver the first measurement requirement to the plurality of terminal devices based on the measurement type sent by the first terminal device.

In some embodiments, the plurality of terminal devices may include the terminal device that sends the measurement requirement, or may not include a terminal device that sends the first measurement requirement. This is not limited in this embodiment of this application.

In some other embodiments, the first measurement requirement may alternatively be determined based on the measurement type that is sent by a core network device and that is received by the network device.

Optionally, in this embodiment of this application, the first measurement requirement may be a performance indicator of a sensing parameter, or the first measurement requirement may be a range of a status parameter of the terminal device.

For example, the sensing parameter may be at least one of a distance, a velocity, an angle, a SAR image, or an ISAR image. Certainly, the sensing parameter may alternatively be a related parameter representing a feature of the target object. This is not limited in this embodiment of this application.

For example, the performance indicator of the sensing parameter may be at least one of resolution, precision, a blur range, a PSLR, or an ISLR. Certainly, the performance indicator of the sensing parameter may alternatively be another indicator for evaluating measurement performance of the sensing parameter. This is not limited in this embodiment of this application.

Optionally, in this embodiment of this application, the status parameter of the terminal device may include at least one of a frequency, a bandwidth, an antenna quantity, an antenna aperture size, a signal dynamic range, an analog-to-digital converter ADC/digital-to-analog converter DAC bit quantity, a noise floor level, clock stability, a location of the terminal device, a velocity of the terminal device, or a situation of a target around the terminal device. Correspondingly, the range of the status parameter of the terminal device may include at least one of a frequency range, a bandwidth range, an antenna quantity range, an antenna aperture size range, a range of the signal dynamic range, an analog-to-digital converter ADC/digital-to-analog converter DAC bit quantity range, a noise floor range, a clock stability range, a location range of the terminal device, a velocity range of the terminal device, or the situation of the target around the terminal device. Certainly, the status parameter of the terminal device may alternatively be another parameter related to the terminal device. This is not limited in this embodiment of this application.

For example, the situation of the target around the terminal device includes whether the target object is present around the terminal device, a quantity of target objects, or a distance between the target object and the terminal device.

For example, when the first measurement requirement is the performance indicator of the sensing parameter, and the first measurement requirement type received by the network device is ranging, the network device may set the first measurement requirement to any one or more elements in a multi-tuple including {resolution of ranging, precision of ranging, blur range of ranging, PSLR of ranging, and ISLR of ranging}. Then, the network device sends the any one or more elements in the multi-tuple to the first terminal device or the second terminal device. When the first measurement requirement type received by the network device is velocity measurement, the network device may set the first measurement requirement to any one or more elements in a multi-tuple including {resolution of velocity measurement, precision of velocity measurement, blur range of velocity measurement, PSLR of velocity measurement, and ISLR of velocity measurement}. Then, the network device sends the any one or more elements in the multi-tuple to the first terminal device or the second terminal device.

For another example, when the first measurement requirement is the range of the status parameter of the terminal device, and the first measurement requirement type received by the network device is SAR imaging, the network device may set the measurement requirement to any one or more elements in a four-tuple including {location range of the terminal device during measurement, velocity range of the terminal device during measurement, operating bandwidth range of the terminal device, and operating frequency range}. Then, the network device sends the any one or more elements in the four-tuple to the first terminal device or the second terminal device.

S430a: The first terminal device receives the first measurement requirement, and determines, based on the first measurement requirement, whether to perform the sensing parameter measurement on the target object.

S430b: The second terminal device receives the first measurement requirement, and determines, based on the first measurement requirement, whether to perform the sensing parameter measurement on the target object.

After the network device separately sends the first measurement requirement to the first terminal device and the second terminal device, the first terminal device and the second terminal device may receive the first measurement requirement, and then determine, based on the first measurement requirement, whether the first terminal device and the second terminal device meet the requirement, to determine whether the first terminal device and the second terminal device can participate in the sensing parameter measurement of the target object. Certainly, a plurality of terminal devices may receive the first measurement requirement, and the plurality of terminal devices may determine, based on the first measurement requirement, whether to perform the sensing parameter measurement on the target object. A quantity of terminal devices that receive the first measurement requirement is not limited in this embodiment of this application.

In steps S430a and S430b, the first terminal device and the second terminal device are used as an example to describe in detail how the terminal device determines, after receiving the first measurement requirement, whether to perform the sensing parameter measurement on the target object.

Optionally, in a possible implementation, when the first measurement requirement is the performance indicator of the sensing parameter, the terminal device may calculate performance of the terminal device based on the status parameter of the terminal device, and then determine whether the performance of the terminal device obtained through calculation meets the performance indicator of the sensing parameter. When the performance of the terminal device obtained through calculation meets the performance indicator of the sensing parameter, the terminal device may participate in the sensing parameter measurement of the target object.

For example, when the measurement requirement type is ranging, the terminal device may calculate the resolution of ranging, the precision of ranging, and the blur range of ranging of the terminal device based on the status parameter of the device.

For example, the resolution of ranging may be calculated according to the following calculation formula (1):

$$\Delta r = \frac{c}{\rho B} \quad (1)$$

$\Delta r$ represents the resolution of ranging, and smaller resolution indicates better performance of the terminal device; c represents a signal propagation velocity (which is the velocity of light if in a vacuum); B is a bandwidth for the terminal device to receive a signal or send a signal; and $\rho$ is a constant. When an apparatus that receives a signal and an apparatus that sends a signal are a same apparatus, a value of ρ is 2. When an apparatus that receives a signal and an apparatus that sends a signal are different apparatuses, a value of ρ is 1.

For example, the precision of ranging may be calculated according to the following calculation formula (2):

$$\delta r = \alpha \frac{\Delta r}{\sqrt{\gamma}} \quad (2)$$

δr represents the precision of ranging, and smaller precision indicates better performance of the terminal device; γ represents an SINR; and α is a constant, and a specific value is related to a waveform.

The blur range of ranging depends on a specific waveform. For example, a blur range of an OFDM waveform may be determined according to the following calculation formula (3):

$$D = \frac{c}{\rho \Delta f} \quad (3)$$

D represents the blur range of ranging, and larger blur range indicates better performance of the terminal device; c represents a signal propagation velocity (which is the velocity of light if in a vacuum); Δf is a subcarrier frequency spacing of the OFDM waveform; and ρ is a constant. When an apparatus that receives a signal and an apparatus that sends a signal are a same apparatus, a value of ρ is 2. When an apparatus that receives a signal and an apparatus that sends a signal are different apparatuses, a value of ρ is 1.

Then, the resolution of ranging, the precision of ranging, and the blur range of ranging that are calculated according to the foregoing formulas are compared with performance indicators, namely, the resolution of ranging, the precision of ranging, and the blur range of ranging, of the sensing parameter that are sent by the network device, to determine whether the calculated values meet the performance indicators of the sensing parameter. When the performance indicators of the sensing parameter in the measurement requirement are met, the terminal device may participate in the sensing parameter measurement of the target object.

For example, the resolution of ranging obtained according to the foregoing calculation formula (1) is 1 m, the precision of ranging (2) is 0.1 m, and the blur range of ranging (3) is 100 m. According to the performance indicators sent by the network device, the performance indicator of the resolution of ranging is smaller than 3 m, the performance indicator of the precision of ranging is smaller than 0.3 m, and the performance indicator of the blur range of ranging is larger than 30 m. In this case, it may be determined that the performance of the terminal device meets the performance indicators in the sensing measurement requirement sent by the network device, and the terminal device may participate in the sensing performance parameter measurement of the target object.

Optionally, in another possible implementation, when the measurement requirement is the range of the status parameter of the terminal device, the terminal device may determine whether the status parameter of the terminal device falls within the range of the status parameter of the terminal device. When the status parameter of the terminal device falls within the range of the status parameter of the terminal device, the terminal device may participate in the sensing parameter measurement of the target object.

For example, when the status parameter of the terminal device, namely, at least one of the frequency, the bandwidth, the antenna quantity, the antenna aperture size, the signal dynamic range, the analog-to-digital converter ADC/digital-to-analog converter DAC bit quantity, noise floor, the clock stability, the location of the terminal device, the velocity of the terminal device, or the situation of the target around the terminal device, falls within the range of the status parameter of the terminal device, the terminal device may participate in the sensing parameter measurement of the target object.

For example, the range of the status parameter of the terminal device includes at least one of the frequency range, the bandwidth range, the antenna quantity range, the antenna aperture size range, the range of the signal dynamic range, the analog-to-digital converter ADC/digital-to-analog converter DAC bit quantity range, the noise floor range, the clock stability range, the location range of the terminal device, the velocity range of the terminal device, a quantity range of target objects around the terminal device, or a distance range between the target object around the terminal device and the terminal device.

For example, the range of the status parameter of the terminal device is {the velocity of the terminal device cannot be greater than 10 m/s, and an operating bandwidth of the terminal device is not less than 100 MHz}. When the status parameter of the terminal device that receives the first measurement requirement meets at least one of the foregoing status parameters, the terminal device may participate in the sensing parameter measurement of the target object. Assuming that the status parameter of the device is that the velocity of the terminal device is 5 m/s, or the operating bandwidth of the terminal device is 150 MHz, or both the velocity of the terminal device and the operating bandwidth of the terminal device fall within the range of the status parameter of the terminal device, it indicates that the status parameter of the device falls within the range of the status parameter of the terminal device. In this case, the terminal device may participate in the sensing parameter measurement of the target object.

It should be noted that, in this embodiment of this application, an example in which the first measurement requirement is mainly sent by the network device is used. In another embodiment, the first measurement requirement may alternatively be obtained in the following manners. The following uses the first terminal device as an example for description.

For example, the first measurement requirement on the first terminal device may be prestored by the first terminal device, or the first measurement requirement on the first terminal device may be sent by the second terminal device or one or more other terminal devices.

For another example, the first measurement requirement may alternatively be sent by one or more terminal devices to the network device, and then forwarded or combined and forwarded by the network device to the first terminal device. Alternatively, the first measurement requirement may be that the second terminal device or another terminal device receives the first measurement requirement from the network device and one or more terminal devices, and then sends the first measurement requirement to the first terminal device. Alternatively, the first measurement requirement may be simultaneously sent by the network device and one or more terminal devices to the first terminal device. Certainly, the first measurement requirement may alternatively be determined in another manner. This is not limited in this embodiment of this application.

S440a: When determining that the sensing parameter measurement needs to be performed, the first terminal device obtains a first sensing parameter measurement result of the target object.

S440b: When determining that the sensing parameter measurement needs to be performed, the second terminal device obtains a second sensing parameter measurement result of the target object. Based on step S430a and step S430b, it may be determined whether the terminal device performs the sensing parameter measurement on the target object. When determining that the terminal device needs to perform the sensing parameter measurement on the target object, the terminal device may obtain the sensing parameter measurement result of the target object based on a measurement signal.

In step S440a and step S440b, the first terminal device and the second terminal device are used as an example. It is assumed that the first terminal device and the second terminal device may perform the sensing parameter measurement after the determining in S430a and S430b. In this case, the first terminal device and the second terminal device may obtain sensing parameter measurement results of the target object. To be specific, a sensing parameter measurement result of the target object obtained by the first terminal device is the first sensing parameter measurement result, and a sensing parameter measurement result of the target object obtained by the second terminal device is the second sensing parameter measurement result.

Optionally, in this embodiment of this application, the measurement signal may be an uplink signal, a downlink signal, or a signal sent by the terminal device to the terminal device.

It should be understood that, in this embodiment of this application, the downlink signal may be a signal received by the terminal device after the signal sent from the network device passes through the target object; the uplink signal may be a signal received by the network device after the signal sent from the terminal device passes through the target object; and the signal sent by the terminal device to the terminal device may be a signal received by the terminal device after the signal sent by the terminal device passes through the target object. The terminal device may obtain the sensing parameter measurement result of the target object based on any one of the foregoing three measurement signals.

S450a: The first terminal device sends the first sensing parameter measurement result to the network device.

S450b: The second terminal device sends the second sensing parameter measurement result to the network device.

In steps S450a and S450b, the first terminal device and the second terminal device are used as an example. After the first terminal device obtains the first sensing parameter measurement result and after the second terminal device obtains the second sensing parameter measurement result, the first terminal device and the second terminal device send the first sensing parameter measurement result and the second sensing parameter measurement result to the network device, respectively.

Certainly, after a plurality of terminal devices that meet the first measurement requirement obtain sensing parameter measurement results, the plurality of terminal devices all need to send the sensing parameter measurement results to the network device, respectively.

It may be understood that when the terminal device obtains the sensing parameter measurement result based on the downlink signal or the signal sent by the terminal device to the terminal device, the terminal device needs to send the sensing parameter measurement result to the network device. When the terminal device obtains the sensing parameter measurement result based on the uplink signal, the terminal device does not need to send the sensing parameter measurement result to the network device, because the uplink signal is a signal received by the network device after the signal sent by the terminal device passes through the target object, in other words, the network device has already received the measurement result, and the terminal device does not need to send the measurement result again.

S460: The network device sends the sensing parameter measurement results to the first terminal device.

In this embodiment of this application, after receiving measurement data sent by the terminal device that performs the sensing parameter measurement, the network device sends all collected measurement data to the first terminal device.

It should be understood that the terminal device is a device that sends the first measurement requirement to the network device. Certainly, if the first measurement requirement is sent by the second terminal device or another terminal device, the network device may send all sensing parameter measurement results to the second terminal device or the another terminal device.

It should be further noted that step S460 is an optional step. For example, when step S410 is performed, the method provided in this application may include S460.

When another terminal device sends the measurement type to the network device, the network device may also send the sensing parameter measurement result to the another terminal device. For example, when the second terminal device sends the measurement type to the network device in step S410, the network device may send the sensing parameter measurement result to the second terminal device in step S460.

According to the multi-terminal joint sensing method provided in this embodiment of this application, terminal devices to perform the sensing parameter measurement on the target object are filtered based on the first measurement requirement sent by the network device, and a terminal device that meets the requirement performs the sensing parameter measurement on the target object. In this case, data quality of the sensing parameter measurement result obtained through measurement is high, and performance of target object sensing is ensured.

Although quality of sensing measurement data can be improved in the foregoing embodiment, the sensing parameter measurement results obtained in the foregoing embodiment may be repeated or invalid. If all sensing parameter measurement results obtained by the terminal devices are sent to the network device, data redundancy or invalidation may also occur on the network device. Therefore, to further enable the network device to obtain needed measurement data, the sensing parameter measurement results need to be further filtered.

Optionally, in a possible implementation, the network device may send a data transmission requirement to the terminal device, and then the terminal device participating in the measurement determines, based on the data transmission requirement, whether to send the sensing parameter measurement result to the network device. In this way, the sensing parameter measurement result obtained through filtering is sent to the network device, thereby reducing the data redundancy, reducing power consumption of the terminal devices and utilization of air interface resources, and reducing data storage pressure and data processing complexity on a network device side.

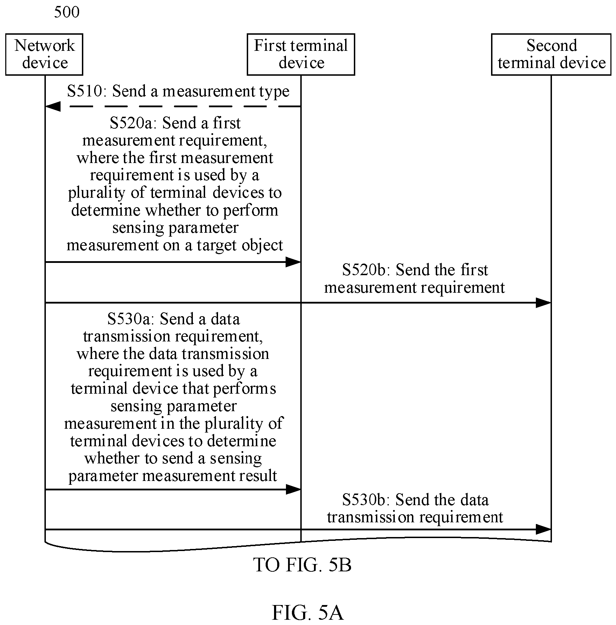

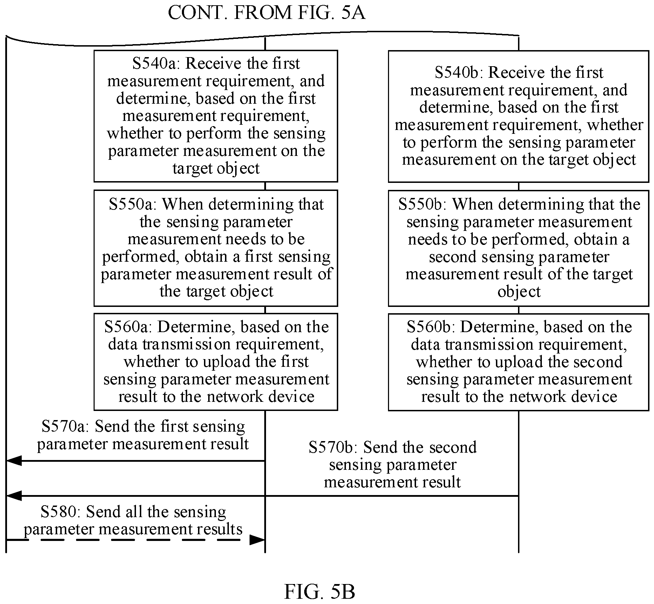

The following uses FIG. 5A and FIG. 5B as an example to specifically describe another example of the multi-terminal joint sensing method according to an embodiment of this application. FIG. 5A and FIG. 5B are an interaction diagram of another example of the multi-terminal joint sensing method according to an embodiment of this application. As shown in FIG. 5A and FIG. 5B, a method 500 includes the following S510 to S580.

S510: A first terminal device sends a measurement type of a target object to a network device, where the measurement type includes at least one of ranging, velocity measurement, angle measurement, SAR imaging, or ISAR imaging.

S520a: The network device receives a first measurement requirement, and sends the first measurement requirement to the first terminal device.

S520b: The network device receives the first measurement requirement, and sends the first measurement requirement to a second terminal device.

In this embodiment of this application, for specific descriptions of step S510, step S520a, and step S520b, refer to step S410, step S420a, and step S420b. Details are not described herein again.

S530a: The network device sends a data transmission requirement to the first terminal device, where the data transmission requirement is used by a terminal device that performs sensing parameter measurement in a plurality of terminal devices to determine whether to send a sensing parameter measurement result.

S530b: The network device sends the data transmission requirement to the second terminal device. The network device may separately send the data transmission requirement to the plurality of terminal devices, and then the terminal devices further determine, based on the data transmission requirement, whether to send sensing parameter measurement results to the network device. In this embodiment of this application, the network device may filter measurement data by sending the data transmission requirement, thereby reducing data redundancy, reducing utilization of air interface resources, and reducing data storage pressure and data processing complexity on a network device side.

It should be understood that the first terminal device and the second terminal device are used as an example in steps S530a and S530b. Certainly, the network device may further send the data transmission requirement to the plurality of terminal devices. A quantity of terminal devices that receive the data transmission requirement is not limited in this embodiment of this application.

It should be further understood that the network device may simultaneously send the data transmission requirement to the first terminal device and the second terminal device in a broadcast manner. When the first terminal device and the second terminal device are in a same group, the network device may further send the data transmission requirement to the first terminal device and the second terminal device in a multicast manner. Alternatively, the network device may separately send the data transmission requirement to the first terminal device and the second terminal device in a unicast manner. In the unicast manner, the data transmission requirement may be sent in a same time period, or may be sent in different time periods.

It should be noted that time at which the network device sends the data transmission requirement to the terminal device is not limited. The network device may send the data transmission requirement to the terminal device while sending the measurement requirement to the terminal device, or the terminal device that meets the measurement requirement sends a signal indication to the network device after obtaining the sensing parameter measurement result. The network device sends, based on the received signal indication, the data transmission requirement to the terminal device that meets the measurement requirement. Certainly, the network device may alternatively send the data transmission requirement in any time period before the terminal device sends the sensing parameter measurement result to the network device. This is not limited in this embodiment of this application.

In some embodiments, in this embodiment of this application, the data transmission requirement may be a signal to interference plus noise ratio SINR requirement, a signal-to-noise ratio SNR requirement, a line of sight LOS and non-line of sight NLOS power ratio requirement, a sampling moment requirement, or a sampling location requirement for measuring a sensing parameter. Alternatively, the data transmission requirement may be another parameter for obtaining the sensing parameter, for example, a target object environment requirement for sampling. This is not limited in this embodiment of this application.

It should be further noted that step S530a and step S530b are optional steps, and the data transmission requirement may alternatively be preset in the terminal device as a data transmission standard. Therefore, whether the network device sends the data transmission requirement to the terminal device is not limited in this embodiment of this application.

S540a: The first terminal device receives the first measurement requirement, and determines, based on the first measurement requirement, whether to perform the sensing parameter measurement on the target object.

S540b: The second terminal device receives the first measurement requirement, and determines, based on the first measurement requirement, whether to perform the sensing parameter measurement on the target object.

S550a: When determining that the sensing parameter measurement needs to be performed, the first terminal device obtains a first sensing parameter measurement result of the target object.

S550b: When determining that the sensing parameter measurement needs to be performed, the second terminal device obtains a second sensing parameter measurement result of the target object. In this embodiment of this application, for steps S540a and S540b, and steps S550a and S550b, refer to the foregoing steps S430a and S430b, and steps S440a and S440b. Details are not described herein again.

S560a: The first terminal device determines, based on the data transmission requirement, whether to upload the first sensing parameter measurement result to the network device.

S560b: The second terminal device determines, based on the data transmission requirement, whether to upload the second sensing parameter measurement result to the network device.

In some embodiments, in step S560a and step S560b, the data transmission requirement sent by the network device may be received, and whether to upload the sensing parameter measurement result to the network device is determined based on the data transmission requirement.

In step S560a and step S560b, the first terminal device and the second terminal device are used as an example to specifically describe how to determine, based on the data transmission requirement, whether the sensing parameter measurement result may be uploaded to the network device in this embodiment of this application.

After the network device sends the data transmission requirement to the first terminal device, the first terminal device receives the data transmission requirement, and then the first terminal device determines, based on the data transmission requirement and based on an SINR, an SNR, a LOS and NLOS power ratio, a sampling moment, or a sampling location that is obtained when the first terminal device performs the sensing parameter measurement, whether the terminal device needs to upload the first sensing parameter measurement result obtained through measurement to the network device.

Similarly, after the network device sends the data transmission requirement to the second terminal device, the second terminal device receives the data transmission requirement, and then the second terminal device determines, based on the data transmission requirement and based on an SINR, an SNR, a LOS and NLOS power ratio, a sampling moment, or a sampling location that is obtained when the second terminal device performs the sensing parameter measurement, whether the terminal device needs to upload the second sensing parameter measurement result obtained through measurement to the network device.

Optionally, in a possible implementation, the network device may deliver the data transmission requirement in a form of a single parameter, and the terminal device may determine, based on the single parameter, whether the terminal device meets the requirement, to determine whether the terminal device needs to upload sensing parameter measurement data to the network device.

For example, when the data transmission requirement delivered by the network device is that the LOS and NLOS power ratio obtained during the sensing parameter measurement should be less than 10 dB, and the LOS and NLOS power ratio obtained when the first terminal device performs the sensing parameter measurement is 8 dB, the first terminal device may send the first sensing parameter measurement result to the network device.

Optionally, in another possible implementation, the network device may deliver the data transmission requirement in a form of a parameter combination, and then the terminal device determines, based on any parameter in the parameter combination, whether the terminal device meets the requirement, to determine whether the terminal device needs to upload sensing parameter measurement data to the network device.

For example, when the data transmission requirement delivered by the network device is {the SNR is greater than 20 dB, and the LOS and NLOS power ratio should be less than 10 dB}, and the SNR obtained when the first terminal device performs the sensing parameter measurement is greater than 20 dB, or the LOS and NLOS power ratio obtained when the first terminal device performs the sensing parameter measurement is 8 dB, or both the SNR and the LOS and NLOS power ratio meet the data transmission requirement, the terminal device may send the sensing parameter measurement result to the network device.

In some other embodiments, the terminal device may further determine, with reference to a preset data transmission requirement, whether to send the sensing parameter measurement result to the network device. A specific determining method is consistent with the determining method in the foregoing embodiment, and details are not described herein again.

S570a: The network device receives the first sensing parameter measurement result sent by the first terminal device.

S570b: The network device receives the second sensing parameter measurement result sent by the second terminal device.

In this embodiment of this application, a first target terminal device that meets the data transmission requirement sends the sensing parameter measurement result to the network device, and the network device may receive the sensing parameter measurement result sent by the first target terminal device.

It should be noted that, compared with the sensing parameter measurement results received by the network device in step S450a and step S450b, the sensing parameter measurement results received by the network device in step S570a and step S570b are sent by the terminal device that participates in the sensing parameter measurement to the network device after filtering. This implementation can reduce data redundancy, reduce power consumption of the terminal devices and utilization of air interface resources, and reduce data storage pressure and data processing complexity on a network device side.

S580: The network device sends the sensing parameter measurement results to the first terminal device.

For specific descriptions of step S580, refer to step S460 in the foregoing embodiment. Details are not described herein again.

To further obtain a sensing parameter measurement result with higher precision, in this embodiment of this application, before the network device sends the first measurement requirement to the terminal device, a second measurement requirement of the terminal device may be sent to the network device. The network device selects, based on the second measurement requirement through preliminary filtering, a terminal device having a measurement capability, and then sends the first measurement requirement to the terminal device having the measurement capability. In this implementation, information exchange between the network device and the terminal device can be implemented. The network device may specifically learn of the measurement capability of the terminal device, and then deliver the first measurement requirement based on the measurement capability, instead of sending the first measurement requirement to all terminal devices. Therefore, in this manner, precision of the sensing parameter measurement result is improved, and a waste of an air interface resource can be reduced.

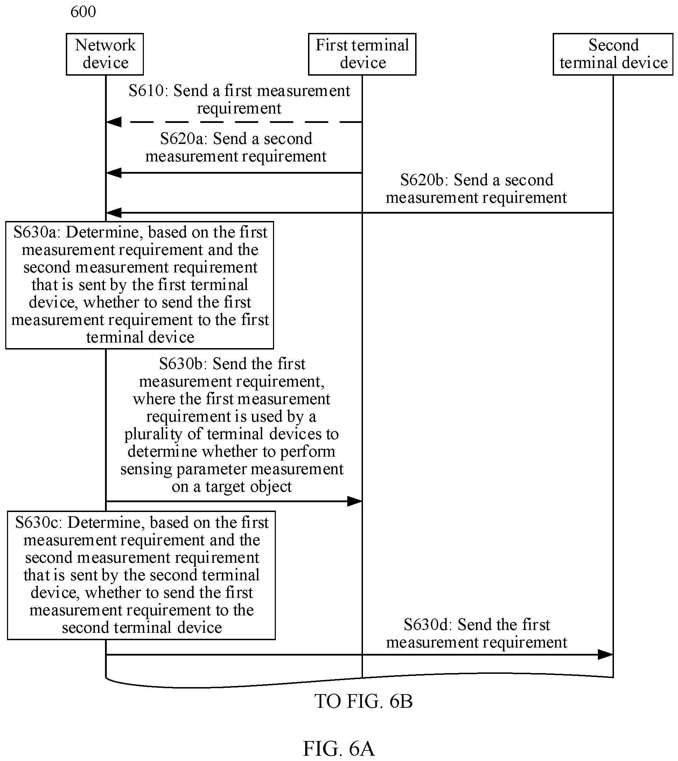

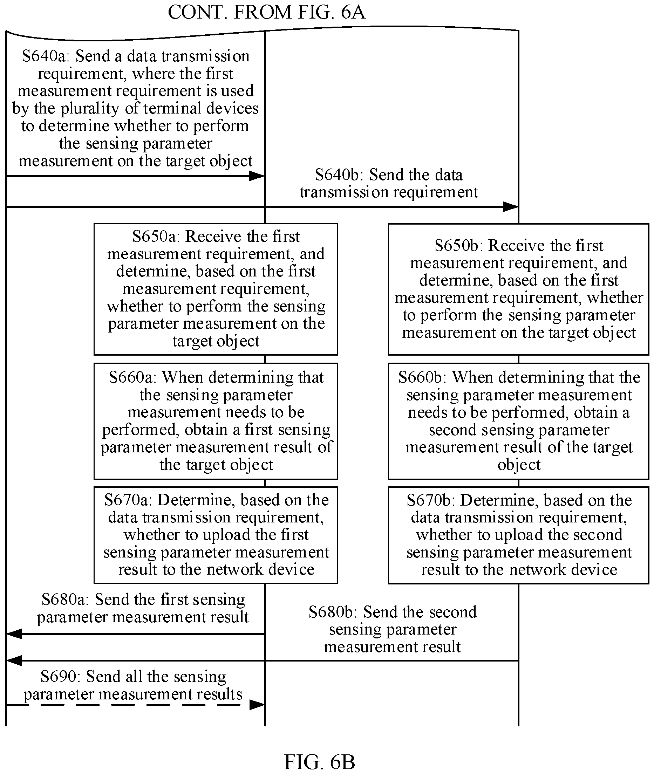

The following uses FIG. 6A and FIG. 6B as an example to specifically describe still another example of the multi-terminal joint sensing method according to an embodiment of this application. FIG. 6A and FIG. 6B are an interaction diagram of another example of the multi-terminal joint sensing method according to an embodiment of this application. As shown in FIG. 6A and FIG. 6B, a method 600 includes the following S610 to S690.

S610: A first terminal device sends a measurement type of a target object to a network device, where the measurement type includes at least one of ranging, velocity measurement, angle measurement, SAR imaging, or ISAR imaging.

In this embodiment of this application, for specific descriptions of step S610, refer to step S410. Details are not described herein again.

S620a: The first terminal device sends a second measurement requirement to the network device, where the second measurement requirement indicates a measurement capability of the terminal device.

S620b: A second terminal device sends the second measurement requirement to the network device. In this embodiment of this application, the terminal device reports a sensing measurement capability of the terminal device to the network device, and then the network device may provide a sensing measurement indicator for the terminal device based on the sensing measurement capability of the terminal device reported by the terminal device. In other words, the network device may deliver a first measurement requirement to the terminal device.

It should be noted that a quantity of terminal devices is not limited in this embodiment of this application. One terminal device may report the sensing measurement capability of the terminal device to the network device, or a plurality of terminal devices may separately report sensing measurement capabilities of the terminal devices to the network device.

In steps S620a and S620b, the first terminal device and the second terminal device are used as an example. To be specific, the first terminal device may send the second measurement requirement to the network device, and the second terminal device may also send the second measurement requirement to the network device.

For example, a sensing measurement capability reported by the first terminal device to the network device is that resolution of ranging is 10 m; and a sensing measurement capability reported by the second terminal device to the network device is that resolution of ranging is 20 m.

Steps S620a and S620b may alternatively be performed after step S410. To be specific, the second measurement requirement may be sent before the network device sends the first measurement requirement and does not need to send a data transmission requirement.

S630a: The network device determines, based on the first measurement requirement and the second measurement requirement that is sent by the first terminal device, whether to send the first measurement requirement to the first terminal device.

S630b: When the network device needs to send the first measurement requirement to the first terminal device, the network device sends the first measurement requirement to the first terminal device.

S630c: The network device determines, based on the first measurement requirement and the second measurement requirement that is sent by the second terminal device, whether to send the first measurement requirement to the second terminal device.

S630d: When the network device needs to send the first measurement requirement to the second terminal device, the network device sends the first measurement requirement to the second terminal device.

When the network device receives the second measurement requirement sent by the terminal device, it indicates that the network device may obtain sensing capabilities of a plurality of terminal devices. In this case, the network device may send the first measurement requirement to a plurality of terminal devices that meet the second measurement requirement.

In this embodiment of this application, the first terminal device and the second terminal device are used as an example. The network device determines, based on the first measurement requirement, the second measurement requirement sent by the first terminal device, and the measurement requirement sent by the second terminal device, whether the network device needs to send the first measurement requirement to the first terminal device or the second terminal device.

For example, the first measurement requirement includes {the resolution of ranging is less than 3 m}, the second measurement requirement reported by the first terminal device and received by the network device includes {the resolution of ranging is 1 m}, and the second measurement requirement reported by the second terminal device and received by the network device includes {the resolution of ranging is 5 m}. In this case, only the first terminal device meets the first measurement requirement, and therefore the network device sends the first measurement requirement to the first terminal device only. For another example, the first measurement requirement includes {precision of ranging is less than 0.1 m}, the second measurement requirement reported by the first terminal device and received by the network device includes {precision of ranging is 0.3 m}, and the second measurement requirement reported by the second terminal device and received by the network device includes {precision of ranging is 0.05 m}. In this case, only the second terminal device meets the first measurement requirement, and therefore the network device sends the first measurement requirement to the second terminal device only. For a case in which a plurality of terminal devices report the second measurement requirement or the second measurement requirement includes a plurality of sensing parameter performance indicators, a processing method is similar, and details are not described herein again.

It should be noted that, in steps S630b and S630d, the first measurement requirement is not sent to all terminal devices, but is sent to some terminal devices after filtering. Therefore, compared with steps S520a and S520b, steps S630b and S630d can save more air interface resources, reduce a waste of an air interface resource, and reduce data processing complexity.

S640a: The network device sends the data transmission requirement to the first terminal device, where the data transmission requirement is used by a terminal device that performs sensing parameter measurement in a plurality of terminal devices to determine whether to send a sensing parameter measurement result.

S640b: The network device sends the data transmission requirement to the second terminal device.

S650a: The first terminal device receives the first measurement requirement, and determines, based on the first measurement requirement, whether to perform the sensing parameter measurement on the target object.

S650b: The second terminal device receives the first measurement requirement, and determines, based on the first measurement requirement, whether to perform the sensing parameter measurement on the target object.

S660a: When determining that the sensing parameter measurement needs to be performed, the first terminal device obtains a first sensing parameter measurement result of the target object.

S660b: When determining that the sensing parameter measurement needs to be performed, the second terminal device obtains a second sensing parameter measurement result of the target object. S670a: The first terminal device determines, based on the data transmission requirement, whether to upload the first sensing parameter measurement result to the network device.

S670b: The second terminal device determines, based on the data transmission requirement, whether to upload the second sensing parameter measurement result to the network device.

S680a: The first terminal device sends the first sensing parameter measurement result to the network device.

S680b: The second terminal device sends the second sensing parameter measurement result to the network device.

S690: The network device sends the sensing parameter measurement results to the first terminal device.

In this embodiment of this application, for steps S640a and S640b to step S690, refer to the foregoing steps S530a and S530b to step S580. Details are not described herein again.

In conclusion, in this embodiment of this application, according to S610 to S690, the terminal device proactively reports the sensing measurement capability, and then the network device compares the sensing measurement capability with the first measurement requirement, to select an appropriate terminal device for the sensing parameter measurement. This implementation can avoid a case in which the network device frequently sends the measurement requirement to the terminal device, thereby reducing air interface overheads.

The foregoing embodiment specifically describes how terminal devices to perform the sensing parameter measurement on the target object are filtered based on the first measurement requirement delivered by the network device, and describes how data obtained by terminal devices that participate in the sensing parameter measurement of the target object is filtered based on the data transmission requirement delivered by the network device. The foregoing embodiment further describes how terminal devices that deliver the first measurement requirement are filtered based on the second measurement requirement sent by the terminal device to the network device before the first measurement requirement is delivered.

The following specifically describes how the network device delivers the first measurement requirement to the first terminal device for different sensing measurement types in steps S420a, S420b, S520a, S520b, S630b, and S630d in the foregoing embodiments.

It should be understood that the sensing measurement types may be generally classified into static target measurement, dynamic target measurement, and environmental imaging. Dynamic target measurement may be further classified into low-velocity dynamic target measurement and high-velocity dynamic target measurement based on a moving velocity of a target.

For example, for the static target measurement, the dynamic target measurement, and the environmental imaging, the network device delivers the first measurement requirement based on Table 1.

**Table 1 Example of a first measurement requirement**

| Sensing measurement type | Example of a first measurement requirement | Delivery format of the first measurement requirement |
|---|---|---|
| Static target measurement | Performance indicators of a sensing parameter:<br><br>Resolution of ranging is smaller than 1 m; and precision of ranging is smaller than 0.1 m. | Measurement Request ::= { Range Resolution 1,  Range Accuracy 0.1  } |
| Low-velocity dynamic target measurement | Range of a status parameter of a terminal device:<br><br>A distance between a measurement location of the terminal and a target is less than 100 m;<br><br>a moving velocity of the terminal is not higher than 10 m/s; and an operating bandwidth of the terminal is not lower than 20 MHz. | Measurement Request ::= { Target Position [23, 56, 1.5], Range Max 100, Velocity Max  0, Bw Min 20  } |
| High-velocity | Performance indicators of a sensing | Measurement Request ::= { |

(continued)

| Sensing measurement type | Example of a first measurement requirement | Delivery format of the first measurement requirement |
|---|---|---|
| dynamic target measurement | parameter and range of a status parameter of a terminal device:<br><br>Resolution of velocity measurement is smaller than 1 m/s;<br><br>precision of velocity measurement is smaller than 0.1 m/s;<br>a moving velocity of the terminal is within<br>a range of 20±10 m/s; and<br>a moving target is within 10 m around the terminal. | Velocity Resolution 1,<br>Velocity Accuracy 0.1,<br>Velocity Range [10, 30],<br>Detect Range 10<br>  } |
| Environmental imaging | Performance indicators of a sensing parameter and range of a status parameter of a terminal device:<br><br>Positioning precision of the terminal is smaller than 0.01 m;<br><br>a measurement location of the terminal is [20, 10, 30] + k * [0.1, 0, 0], k=0, 1, ..., 99;<br>a moving velocity of the terminal is not higher than 10 m/s; and<br><br>an operating bandwidth of the terminal is not lower than 100 MHz. | Measurement Request ::= {<br>Position Accuracy 0.01,<br>Position Reference [20, 10, 30],<br>Position Step [0.1, 0, 0],<br>Position Index [0,1,..., 99],<br>Velocity Max 10,<br>Bw Min 100<br>  } |

Optionally, in a possible implementation, in this embodiment of this application, when the network device needs to send measurement requirements to the terminal device, the network device may send the measurement requirements to the terminal device by using a set index.

It should be understood that the set index may mean that a plurality of first measurement requirements are aggregated as a set, and then a unique index is defined for each set as an identifier of the set.

Compared with separately sending the plurality of first measurement requirements, sending by using a set index can meet a requirement for a lower delay in a real-time sensing scenario, and can greatly reduce control overheads of an air interface.

For example, a correspondence between a measurement requirement index and a measurement requirement set may be first predefined in the network device and the terminal device. When the network device separately sends the measurement requirement index to a plurality of terminal devices, and after the terminal device receives the measurement requirement index sent by the network device, the measurement requirement set may be found in the predefined index, in other words, the measurement requirement may be determined based on the measurement requirement index.

For example, a plurality of first measurement requirements in the following may be delivered according to an indexing method shown in Table 2.

**Table 2 Example of a definition of a parameter set corresponding to a first measurement requirement**

| Sensing Measurement Request (SMR) index | Parameter set | Description |
|---|---|---|
| 0 | SMR[0]::= {Range Resolution 10<br>   Angle Resolution 10<br>   Velocity Resolution 10<br>   Snr Min 10<br>} | Distance resolution is smaller than 10 m;<br><br>angle resolution is smaller than 10°;<br><br>velocity resolution is smaller than 10 m/s; and<br>an SNR is greater than 10 dB. |
| 1 | SMR[1] ::= {<br>   Range Resolution 3 | Distance resolution is smaller than 3m; |

(continued)

| Sensing Measurement Request (SMR) index | Parameter set | Description |
|---|---|---|
| | Angle Resolution 3<br>Velocity Resolution 3<br>Snr Min 15<br>} | angle resolution is smaller than 3°;<br><br>velocity resolution is smaller than 3m/s; and<br><br>an SNR is greater than 15 dB. |
| 2 | SMR[2] ::= {<br>Range Resolution 1<br>Angle Resolution 1<br>Velocity Resolution 1<br>Snr Min 20<br>} | Distance resolution is smaller than 1m;<br><br>angle resolution is smaller than 1°;<br><br>velocity resolution is smaller than 1m/s; and<br><br>an SNR is greater than 20 dB. |
| 3 | SMR[3] ::= {<br>Range Resolution 0.1<br>Angle Resolution 0.1<br>Velocity Resolution 0.1<br>Snr Min 30<br>} | Distance resolution is smaller than 0.1 m;<br><br>angle resolution is smaller than 0.1°;<br><br>velocity resolution is smaller than 0.1 m/s; and<br><br>an SNR is greater than 30 dB. |

The following specifically describes how data transmission requirements are delivered for different sensing measurement types in steps S530a, S530b, S640a, and S640b in the foregoing embodiments.

For example, for the static target measurement, the dynamic target measurement, and the environmental imaging, the network device delivers the data transmission requirement based on Table 3.

**Table 3 Example of a definition of a data transmission requirement**

| Sensing measurement type | Data transmission requirement | Delivery format of the data transmission requirement |
|---|---|---|
| Static target measurement | An SNR is greater than 20 dB; and a LOS/NLOS power ratio is less than 10 dB. | Data Request ::= {<br>Snr Min 20,<br>Nlos Power Min -10 } |
| Dynamic target measurement | An SNR is greater than 20 dB; a LOS/NLOS power ratio is less than 10 dB; and a sampling location is within a range of [20, 10, 30] $\pm$ [10, 10, 5] m. | Data Request ::= {<br>Snr Min 20,<br>Nlos Power Min -10,<br>Position Reference [20, 10, 30],<br>Position Range [10, 10, 5]<br>} |
| Environmental imaging | An SNR is greater than 20 dB; a LOS/NLOS power ratio is less than 10 dB; and a sampling location is within a range of [20, 10, 30] $\pm$ [1, 1, 0.5] m. | Data Request ::= {<br>Snr Min 20,<br>Nlos Power Min -10,<br>Position Reference [20, 10, 30],<br>Position Range [1, 1, 0.5]<br>} |

Optionally, in a possible implementation, in this embodiment of this application, the network device may send a plurality of data transmission requirements to the terminal device by using a set index.

Compared with separately sending the plurality of data transmission requirements, sending by using a set index can meet a requirement for a lower delay in a real-time sensing scenario, and can greatly reduce control overheads of an air interface.

Specifically, a correspondence between a data transmission requirement index and a data transmission requirement set may be first predefined in the network device and the terminal device. When the network device separately sends the data transmission requirement index to a plurality of terminal devices, and after the terminal device receives the data transmission requirement index sent by the network device, the data transmission requirement set may be found in the predefined index, in other words, the data transmission requirement may be determined based on the data transmission requirement index.

For example, a plurality of data transmission requirements in the following may be delivered according to an indexing method shown in Table 4.

**Table 4 Example of a definition of a parameter set corresponding to a data transmission requirement**

| Sensing Data Request (SDR) index | Parameter set | Description |
|---|---|---|
| 0 | SDR[0] ::= {<br>    Snr Min 20,<br>Nlos Power Min } -10 | An SNR is greater than 20 dB; and<br><br>a LOS/NLOS power ratio is less than 10 dB. |
| 1 | SDR[1] ::= {<br>    Snr Min 20,<br>Nlos Power Min -10,<br>Position Reference [20, 10, 30],<br>Position Range } [10, 10, 5] | An SNR is greater than 20 dB;<br>a LOS/NLOS power ratio is less than 10 dB; and<br>a sampling location is within a range of [20, 10, 30] $\pm$ [10, 10, 5] m. |
| 2 | SDR[2] ::= {<br>    Snr Min 20,<br>Nlos Power Min -10,<br>Position Reference [20, 10, 30],<br>Position Range } [1, 1, 0.5] | An SNR is greater than 20 dB;<br>a LOS/NLOS power ratio is less than 10 dB; and<br>a sampling location is within a range of [20, 10, 30] $\pm$ [1, 1, 0.5] m. |

The following specifically describes how the terminal device reports the second measurement requirement for different sensing measurement types in steps S620a and S620b in the foregoing embodiment.

For example, for the static target measurement, the dynamic target measurement, and the environmental imaging, the terminal device reports the second measurement requirement based on Table 5.

**Table 5 Example of a definition of a second measurement requirement**

| Sensing measurement type | Example of a sensing measurement capability | Reporting format of the sensing measurement capability |
|---|---|---|
| Static target measurement | Defined based on a performance indicator of a sensing parameter:<br>Resolution of ranging is 1 m; and precision of ranging is 0.1 m. | Measurement Capability ::= {<br>Range Resolution 1,<br>Range Accuracy 0.1<br>} |
| | Defined based on a range of a status parameter of a terminal device:<br>A location of the terminal is [30, 50, 1.5] m;<br><br>a moving velocity of the terminal is 10 m/s;<br><br>an operating bandwidth of the terminal is 20 MHz; and<br>an antenna quantity of the terminal is 4. | Measurement Capability ::= {<br>position [30, 50, 1.5],<br>velocity 10,<br>bw 20,<br>antenna Number 4<br>} |
| Dynamic target measurement | Defined based on a combination of a performance indicator of a sensing parameter and a range of a status parameter of a terminal device: | Measurement Capability ::= {<br>Velocity Resolution 1,<br>Velocity Accuracy 0.1,<br>velocity 20 |

(continued)

| Sensing measurement type | Example of a sensing measurement capability | Reporting format of the sensing measurement capability |
|---|---|---|
| | Resolution of velocity measurement is 1 m/s; precision of velocity measurement is 0.1 m/s; and a moving velocity of the terminal is 20 m/s. | } |
| Environmental imaging | Defined based on a combination of a performance indicator of a sensing parameter and a range of a status parameter of a terminal device: Positioning precision of the terminal is 0.01 m; a moving velocity of the terminal is 10 m/s; and an operating bandwidth of the terminal is 100 MHz. | Measurement Capability ::= { Position Accuracy 0.01, velocity 10, bw 100 } |

Optionally, in a possible implementation, in this embodiment of this application, when the terminal device needs to send second measurement requirements to the network device, the terminal device may send the second measurement requirements to the network device by using a set index. Compared with separately sending the second measurement requirements, sending by using a set index can meet a requirement for a lower delay in a real-time sensing scenario, and can greatly reduce control overheads of an air interface.

Specifically, a correspondence between a second measurement requirement index and a second measurement requirement set may be first predefined in the network device and the terminal device. When a plurality of terminal devices separately send the second measurement requirement index to the network device, and after the terminal device receives the second measurement requirement index sent by the network device, the second measurement requirement set may be found in the predefined index, in other words, the second measurement requirement may be determined based on the second measurement requirement index.

For example, the second measurement requirements in the following may be delivered according to an indexing method shown in Table 6.

**Table 6 Example of a definition of a parameter set corresponding to a second measurement requirement**

| Sensing Measurement Capability (SMC) index | Parameter set | Description |
|---|---|---|
| 0 | SMC [0]:= { Range Resolution 1, Range Accuracy 0.1 } | Resolution of ranging is 1 m; and precision of ranging is 0.1 m. |
| 1 | SMC [1] ::= { position [30, 50, 1.5], velocity 10, bw 20, antenna Number 4 } | A location of a terminal is [30, 50, 1.5] m; a moving velocity of the terminal is 10 m/s; an operating bandwidth of the terminal is 20 MHz; and an antenna quantity of the terminal is 4. |
| 2 | SMC [2] ::= { Velocity Resolution 1, Velocity Accuracy 0.1, velocity 20 } | Resolution of velocity measurement is 1 m/s; precision of velocity measurement is 0.1 m/s; and a moving velocity of the terminal is 20 m/s. |
| 3 | SMC [3] ::= { Position Accuracy 0.01, velocity 10, bw 100 | Positioning precision of a terminal is 0.01 m; a moving velocity of the terminal is 10 m/s; and |

(continued)

| Sensing Measurement Capability (SMC) index | Parameter set | Description |
|---|---|---|
| | } | an operating bandwidth of the terminal is 100 MHz. |

In conclusion, in this embodiment of this application, terminal devices to perform the sensing parameter measurement on the target object may be filtered based on the measurement requirement sent by the network device, and only a terminal device that meets the measurement requirement performs the sensing parameter measurement on the target object. In this case, precision of the sensing parameter measurement result obtained through measurement is high, and a waste of a communication resource is reduced.

Further, in this embodiment of this application, sensing parameter measurement results of terminal devices participating in the measurement may be filtered based on the data transmission requirement sent by the network device, and then a sensing parameter measurement result obtained through filtering is sent to the network device, thereby reducing power consumption of the terminal devices and utilization of air interface resources, and reducing data redundancy, data storage pressure, and data processing complexity at a network device end.

Further, in this embodiment of this application, the network device selects, through preliminary filtering and based on the second measurement requirement sent by the terminal device to the network device, a terminal device having a measurement capability, and then sends the first measurement requirement to the terminal device having the measurement capability. In this case, the network device may specifically learn of measurement capabilities of the terminal devices, and then deliver the first measurement requirement on the measurement capabilities instead of sending the first measurement requirement to all terminal devices. Therefore, this can improve the precision of the sensing parameter measurement result while further reducing a waste of an air interface resource.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing methods may be unnecessary, or some new steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

With reference to FIG. 1 to FIG. 6A and FIG. 6B, the foregoing describes embodiments of the multi-terminal joint sensing methods provided in embodiments of this application. The following describes the terminal device provided in embodiments of this application.

In this embodiment, the foregoing terminal device may be divided into function modules according to the foregoing methods. For example, each functional module may be obtained through division based on each corresponding function, or two or more functions may be integrated into one processing module. The integrated module may be implemented in a form of hardware. It should be noted that module division in this embodiment is an example and is merely logical function division. In actual implementation, there may be another division manner.

It should be noted that related content of the steps in the foregoing method embodiments may be referenced to function descriptions of corresponding function modules, and details are not described herein again.

The terminal device provided in this embodiment of this application is configured to perform any multi-terminal joint sensing method provided in the foregoing method embodiments, and therefore can achieve a same effect as the foregoing implementation methods. When an integrated unit is used, the terminal device may include a processing module, a storage module, and a communication module. The processing module may be configured to control and manage an action of the terminal device. For example, the processing module may be configured to support the terminal device in performing steps performed by a processing unit. The storage module may be configured to support storage of program code, data, and the like. The communication module may be configured to support communication between the terminal device and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

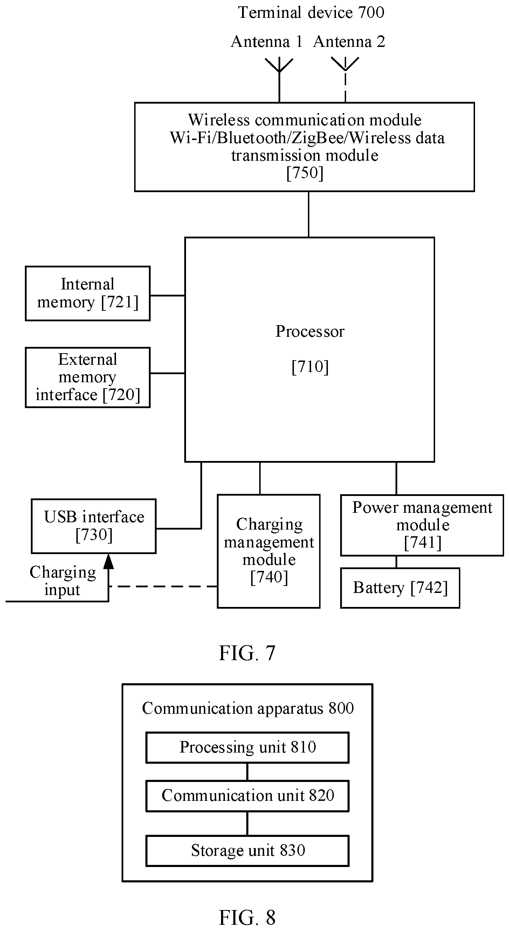

For example, FIG. 7 is a diagram of a hardware structure of an example of a terminal device 700 according to this application. The terminal device 700 may be the foregoing first terminal device, the foregoing second terminal device, or another terminal device. As shown in FIG. 7, the terminal device 700 may include a processor 710, an external memory interface 720, an internal memory 721, a universal serial bus (universal serial bus, USB) interface 730, a charging management module 740, a power management module 741, a battery 742, an antenna 1, an antenna 2, a wireless communication module 750, and the like.

It may be understood that the structure shown in this embodiment of this application does not constitute a specific limitation on the terminal device 700. In some other embodiments of this application, the terminal device 700 may include more or fewer components than those shown in the figure, or some components may be combined, or some components may be divided, or different component arrangements may be used. The components shown in the figure may be implemented by hardware, software, or a combination of software and hardware.

The processor 710 may include one or more processing units. For example, the processor 710 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU), or the like. Different processing units may be independent components, or may be integrated into one or more processors. In some embodiments, the terminal device 700 may alternatively include one or more processors 710. The controller may generate an operation control signal based on instruction operation code and a time sequence signal, to complete control of instruction fetching and instruction execution.

In some embodiments, the processor 710 may include one or more interfaces. The interface may include an inter-integrated circuit (inter-integrated circuit, I2C) interface, an inter-integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 730 is an interface that conforms to a USB standard specification, and may be specifically a mini USB interface, a micro USB interface, a USB Type-C interface, or the like. The USB interface 730 may be configured to connect to a charger to charge the terminal device 700, or may be configured to perform data transmission between the terminal device 700 and a peripheral device.

It may be understood that an interface connection relationship between the modules illustrated in this embodiment of this application is merely an example for description, and constitutes no limitation on the structure of the terminal device 700. In some other embodiments of this application, the terminal device 700 may alternatively use an interface connection manner different from that in the foregoing embodiments, or use a combination of a plurality of interface connection manners.

A wireless communication function of the terminal device 700 may be implemented by using the antenna 1, the antenna 2, the wireless communication module 750, and the like.

The wireless communication module 750 may provide a wireless communication solution that is applied to the terminal device 700 and that includes Wi-Fi (including Wi-Fi aware and Wi-Fi AP), Bluetooth (Bluetooth, BT), and a wireless data transmission module (for example, 433 MHz, 868 MHz, and 715 MHz). The wireless communication module 750 may be one or more components integrating at least one communication processor module. The wireless communication module 750 receives an electromagnetic wave through the antenna 1 or the antenna 2 (or the antenna 1 and the antenna 2), performs filtering and frequency modulation processing on an electromagnetic wave signal, and sends a processed signal to the processor 710. The wireless communication module 750 may further receive a to-be-sent signal from the processor 710, perform frequency modulation and amplification on the to-be-sent signal, and convert the to-be-sent signal into an electromagnetic wave for radiation through the antenna 1 or the antenna 2.

The external memory interface 720 may be configured to connect to an external storage card, for example, a micro SD card, to extend a storage capability of the terminal device 700. The external storage card communicates with the processor 710 through the external memory interface 720, to implement a data storage function. For example, files such as music and videos are stored in the external storage card.

The internal memory 721 may be configured to store one or more computer programs, and the one or more computer programs include instructions. The processor 710 may run the instructions stored in the internal memory 721, so that the terminal device 700 performs the multi-terminal joint sensing method provided in some embodiments of this application, various applications, data processing, and the like. The internal memory 721 may include a code storage area and a data storage area. The code storage area may store an operating system. The data storage area may store data created in a process of using the terminal device 700, and the like. In addition, the internal memory 721 may include a high-speed random access memory, and may further include a nonvolatile memory, for example, one or more magnetic disk storage components, a flash memory component, or a universal flash storage (universal flash storage, UFS). In some embodiments, the processor 710 may run the instructions stored in the internal memory 721 and/or instructions stored in a memory disposed in the processor 710, so that the terminal device 700 performs the multi-terminal joint sensing method provided in embodiments of this application, other applications, data processing, and the like.

The terminal device 700 includes but is not limited to a smart television, a large-screen device, a mobile phone, a tablet computer, a notebook computer, a large-screen television, a smart household product, a PDA, a POS, a vehicle-mounted computer, or the like. This is not limited herein in this embodiment of this application.

It should be understood that, for a specific process in which the terminal device 700 performs the foregoing corresponding steps, refer to the foregoing related descriptions of the steps performed by the first terminal device or the second terminal device described with reference to the embodiments in FIG. 4, FIG. 5A and FIG. 5B, and FIG. 6A and FIG. 6B. For brevity, details are not described herein again.

FIG. 8 is a schematic block diagram of another example of a communication apparatus 800 according to an embodiment of this application. The communication apparatus 800 may correspond to the first terminal device and the second terminal device described in the embodiments of the method 400 to the method 600. Alternatively, the communication apparatus 800 may be used in chips or components of the first terminal device and the second terminal device. In addition, modules or units in the communication apparatus 800 are respectively configured to perform actions or processing processes performed by the first terminal device or the second terminal device described in the embodiments of the method 400 to the method 600. As shown in FIG. 8, the communication apparatus 800 may include a processing unit 810 and a communication unit 820. Optionally, the communication apparatus 800 may further include a storage unit 830.

It should be understood that, for a specific process in which the units in the communication apparatus 800 perform the foregoing corresponding steps, refer to the foregoing related descriptions of the steps performed by the first terminal device or the second terminal device described with reference to the embodiments in FIG. 4, FIG. 5A and FIG. 5B, and FIG. 6A and FIG. 6B. For brevity, details are not described herein again.

Optionally, the communication unit 820 may include a receiving unit (module) and a sending unit (module), configured to perform steps of receiving information and sending information by the first terminal device or the second terminal device in the foregoing method embodiments. The storage unit 830 is configured to store instructions executed by the processing unit 810 and the communication unit 820. The processing unit 810, the communication unit 820, and the storage unit 830 are in communication connection. The storage unit 830 stores the instructions. The processing unit 810 is configured to execute the instructions stored in the storage unit 830. The communication unit 820 is configured to receive or send a specific signal when driven by the processing unit 810.

It should be understood that the communication unit 820 may be a transceiver, an input/output interface, an interface circuit, or the like. For example, the communication unit 820 may be implemented by the wireless communication module 750 in the embodiment shown in FIG. 7. The storage unit may be a memory. For example, the storage unit may be implemented by the external memory interface 720 or the internal memory 721 in the embodiment shown in FIG. 7. The processing unit 810 may be implemented by the processor 710, or the processor 710 and the internal memory 721, in the embodiment shown in FIG. 7.

It should be further understood that the communication apparatus 800 shown in FIG. 8 may be the foregoing first terminal device or the foregoing second terminal device, or the first terminal device or the second terminal device may include the communication apparatus 800 shown in FIG. 8.

The foregoing describes the terminal device provided in embodiments of this application with reference to FIG. 7 and FIG. 8. The following describes the network device provided in embodiments of this application.

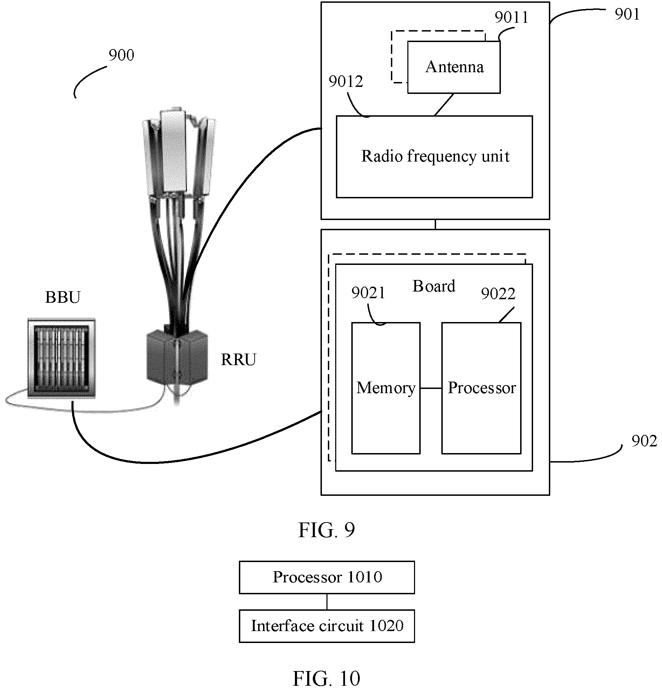

FIG. 9 is a diagram of a structure of a network device 900 according to an embodiment of this application. The network device 900 may be configured to implement functions of the network device in the foregoing methods. The network device 900 includes one or more radio units, such as a remote radio unit (remote radio unit, RRU) 901, and one or more baseband units (baseband units, BBUs) (which may also be referred to as a digital unit, (digital unit, DU)) 902. The RRU 901 may be referred to as a transceiver unit, a transceiver, a transceiver circuit, or the like, and may include at least one antenna 9011 and a radio frequency unit 9012. The RRU 901 is mainly configured to perform receiving and sending of a radio frequency signal and conversion between a radio frequency signal and a baseband signal, for example, send a signaling message in the foregoing embodiments to a terminal device. The BBU 902 is mainly configured to perform baseband processing, control a base station, and the like. The RRU 901 and the BBU 902 may be physically disposed together, or may be physically separated, that is, in a distributed base station. The BBU 902 is a control center of the base station, may also be referred to as a processing unit, and is mainly configured to perform baseband processing functions such as channel coding, multiplexing, modulation, or spreading. For example, the BBU (the processing unit) 902 may be configured to control the base station to perform an operation procedure related to the network device in the foregoing method embodiments.

In an example, the BBU 902 may include one or more boards. A plurality of boards may jointly support a radio access network (for example, an LTE system or a 5G system) of a single access standard, or may respectively support radio access networks of different access standards. The BBU 902 further includes a memory 9021 and a processor 9022. The memory 9021 is configured to store necessary instructions and necessary data. For example, the memory 9021 stores a codebook and the like in the foregoing embodiments. The processor 9022 is configured to control the base station to perform a necessary action, for example, configured to control the base station to perform the operation procedure related to the network device in the foregoing method embodiments. The memory 9021 and the processor 9022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of 902 and 901 may be implemented by using the SoC technology, for example, implemented by using a base station function chip. The base station function chip integrates components such as a processor, a memory, and an antenna interface. A program of a base station-related function is stored in the memory. The processor executes the program to implement the base station-related function. Optionally, the base station function chip can also read from an external memory of the chip, to implement the base station-related function.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides a chip system. As shown in FIG. 10, the chip system includes at least one processor 1010 and at least one interface circuit 1020. The processor 1010 and the interface circuit 1020 may be connected to each other through a line. For example, the interface circuit 1020 may be configured to receive a signal from another apparatus (for example, a memory of the terminal device 700). For another example, the interface circuit 1020 may be configured to send a signal to another apparatus (for example, the processor 710). For example, the interface circuit 1020 may read instructions stored in the memory, and send the instructions to the processor 710. When the instructions are executed by the processor 710, the terminal device may be enabled to perform the steps performed by the terminal device (the first terminal device or the second terminal device) in the foregoing embodiments. Certainly, the chip system may further include another discrete component. This is not specifically limited in this embodiment of this application.

An embodiment of this application further provides a multi-terminal joint sensing system. The system includes the network device (for example, a base station) and the terminal device (for example, a mobile phone or a vehicle) provided in the foregoing method embodiments.

An embodiment of this application further provides a computer-readable storage medium, configured to store computer program code. The computer program includes instructions used to perform any multi-terminal joint sensing method provided in embodiments of this application. The readable medium may be a read-only memory (read-only memory, ROM) or a random access memory (random access memory, RAM). This is not limited in this embodiment of this application. This application further provides a computer program product. The computer program product includes instructions. When the instructions are executed, a network device and a terminal device are enabled to perform corresponding operations in the foregoing methods.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any multi-terminal joint sensing method provided in embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of the feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device, or the processing unit and the memory may be integrated together.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in this embodiment of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

All or some of the methods in embodiments of this application may be implemented by software, hardware, firmware, or any combination thereof. When the software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. A part or all of the units may be selected based an actual requirement to achieve the objectives of the solutions of embodiments.

In addition, functional units in embodiments of this application may be integrated into one processing unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the prior art, or some of the technical solutions may be implemented in a form of a software product. The computer software product is stored in a readable storage medium, and includes several instructions for enabling a computer device (which may be a personal computer, a server, or a network device) to perform all or some of the steps of the methods described in embodiments of this application. The foregoing readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing method, wherein the method comprises:

   determining a first measurement requirement;
   determining, based on the first measurement requirement, whether to perform sensing parameter measurement on a target object;
   when determining that the sensing parameter measurement needs to be performed, obtaining a sensing parameter measurement result of the target object; and
   sending the sensing parameter measurement result.

2. The method according to claim 1, wherein before the sending the sensing parameter measurement result, the method further comprises:

   determining, based on a data transmission requirement, whether to send the sensing parameter measurement result; and
   when determining that the sensing parameter measurement result needs to be sent, sending the sensing parameter measurement result.

3. The method according to claim 2, wherein the method further comprises:
   receiving the data transmission requirement sent by a network device.

4. The method according to claim 2 or 3, wherein the data transmission requirement comprises an index or an identifier of the data transmission requirement.

5. The method according to any one of claims 1 to 4, wherein the first measurement requirement comprises an index or an identifier of the first measurement requirement.

6. The method according to any one of claims 1 to 5, wherein the first measurement requirement comprises at least one of a performance indicator of a sensing parameter or a range of a status parameter of a terminal device.

7. The method according to claim 6, wherein the sensing parameter comprises at least one of a distance, a velocity, an angle, a synthetic aperture radar SAR image, or an inverse synthetic aperture radar ISAR image.

8. The method according to claim 6 or 7, wherein the performance indicator of the sensing parameter comprises at least one of resolution, precision, a blur range, a peak side lobe ratio PSLR, or an integrated side lobe ratio ISLR.

9. The method according to any one of claims 6 to 8, wherein the range of the status parameter of the terminal device comprises at least one of a frequency range, a bandwidth range, an antenna quantity range, an antenna aperture size range, a signal dynamic range, an analog-to-digital converter ADC/digital-to-analog converter DAC bit quantity range, a noise floor range, a clock stability range, a location range of the terminal device, a velocity range of the terminal device, or a situation of a target around the terminal device.

10. The method according to claim 9, wherein the situation of the target around the terminal device comprises:
at least one of whether the target object is present around the terminal device, a quantity of target objects, or a distance between the target object and the terminal device.

11. The method according to any one of claims 2 to 10, wherein the data transmission requirement comprises at least one of a signal-to-interference-plus-noise ratio SINR requirement, a signal-to-noise ratio SNR requirement, a line of sight LOS and non-line of sight NLOS power ratio requirement, a sampling moment requirement, or a sampling location requirement for measuring the sensing parameter.

12. The method according to claim 6, wherein when the first measurement requirement comprises the performance indicator of the sensing parameter, the determining, based on the first measurement requirement, whether to perform sensing parameter measurement on a target object comprises:

determining performance of the sensing parameter of the terminal device based on the status parameter of the terminal device; and
when the performance of the sensing parameter of the terminal device meets the performance indicator of the sensing parameter, performing the sensing parameter measurement on the target object.

13. The method according to claim 9, wherein when the first measurement requirement comprises the range of the status parameter of the terminal device, the determining, based on the first measurement requirement, whether to perform sensing parameter measurement on a target object comprises:
when at least one of a frequency of the terminal device, a bandwidth, an antenna quantity, an antenna aperture, the signal dynamic range, an ADC/DAC bit quantity, noise floor, clock stability, a location of the terminal device, a velocity of the terminal device, or the situation of the target around the terminal device falls within the range of the status parameter of the terminal device, performing the sensing parameter measurement on the target object.

14. The method according to any one of claims 1 to 13, wherein before the determining a first measurement requirement, the method further comprises:

sending a second measurement requirement, wherein the second measurement requirement indicates a sensing measurement capability of the terminal device; and
the determining, based on the first measurement requirement, whether to perform sensing parameter measurement on a target object comprises:
determining, based on the first measurement requirement and the second measurement requirement, whether to perform the sensing parameter measurement on the target object.

15. The method according to any one of claims 1 to 14, wherein the method further comprises:
sending a measurement type of the target object, wherein the measurement type comprises at least one of ranging, velocity measurement, angle measurement, SAR imaging, or ISAR imaging.

16. The method according to any one of claims 1 to 15, wherein the determining a first measurement requirement comprises:
receiving the first measurement requirement sent by the network device.

17. A sensing method, wherein the method comprises:

sending a first measurement requirement to one or more terminal devices, wherein the first measurement requirement is used by the one or more terminal devices to determine whether to perform sensing parameter measurement on a target object; and
receiving a sensing parameter measurement result sent by at least one target terminal device, wherein the at least one target terminal device is a terminal device that performs the sensing parameter measurement in the one or more terminal devices.

**18.** The method according to claim 17, wherein before the receiving a sensing parameter measurement result sent by at least one target terminal device, the method further comprises:

sending a data transmission requirement to the one or more terminal devices, wherein the data transmission requirement is used by the terminal device that performs the sensing parameter measurement in the one or more terminal devices to determine whether to send the sensing parameter measurement result; and
the receiving a sensing parameter measurement result sent by at least one target terminal device comprises:
receiving the sensing parameter measurement result sent by a first target terminal device, wherein the first target terminal device is at least one terminal device in the one or more target terminal devices.

**19.** The method according to claim 18, wherein the data transmission requirement comprises an index or an identifier of the data transmission requirement.

**20.** The method according to any one of claims 17 to 19, wherein the first measurement requirement comprises an index or an identifier of the first measurement requirement.

**21.** The method according to any one of claims 17 to 20, wherein the first measurement requirement comprises at least one of a performance indicator of a sensing parameter or a range of a status parameter of a terminal device.

**22.** The method according to claim 21, wherein the sensing parameter comprises at least one of a distance, a velocity, an angle, a SAR image, or an ISAR image.

**23.** The method according to claim 21 or 22, wherein the performance indicator of the sensing parameter comprises at least one of resolution, precision, a blur range, a peak side lobe ratio PSLR, or an integrated side lobe ratio ISLR.

**24.** The method according to any one of claims 17 to 19, wherein the range of the status parameter of the terminal device comprises at least one of a frequency range, a bandwidth range, an antenna quantity range, an antenna aperture size range, a signal dynamic range, an ADC/DAC bit quantity range, a noise floor range, a clock stability range, a location range of the terminal device, a velocity range of the terminal device, or a situation of a target around the terminal device.

**25.** The method according to claim 24, wherein the situation of the target around the terminal device comprises:
at least one of whether the target object is present around the terminal device, a quantity of target objects, or a distance between the target object and the terminal device.

**26.** The method according to any one of claims 18 to 25, wherein the data transmission requirement comprises at least one of an SINR requirement, an SNR requirement, a LOS and NLOS power ratio requirement, a sampling moment requirement, or a sampling location requirement for measuring the sensing parameter.

**27.** The method according to any one of claims 17 to 26, wherein the method further comprises:

receiving a second measurement requirement sent by a first terminal device; and
the sending a first measurement requirement to one or more terminal devices comprises:
sending the first measurement requirement to the at least one terminal device based on the second measurement requirement, wherein the first terminal device is any one of the one or more terminal devices.

**28.** The method according to any one of claims 17 to 27, wherein the sending a first measurement requirement to one or more terminal devices comprises:
sending the first measurement requirement to the one or more terminal devices in at least one of a broadcast manner, a multicast manner, or a unicast manner.

**29.** A communication apparatus, comprising a unit configured to perform each step of the method according to any one of claims 1 to 16, or a unit configured to perform each step of the method according to any one of claims 17 to 28.

**30.** A communication apparatus, wherein the apparatus comprises at least one processor, and the at least one processor is coupled to at least one memory; and
the at least one processor is configured to execute a computer program or instructions stored in the at least one memory, to enable the communication apparatus to perform the method according to any one of claims 1 to 16 or the method according to any one of claims 17 to 28.

31. The communication apparatus according to claim 30, wherein the apparatus further comprises the at least one memory.

32. A computer-readable storage medium, wherein the computer-readable storage medium stores a computer program or instructions; and when a computer reads and executes the computer program or the instructions, the computer is enabled to perform the method according to any one of claims 1 to 16 or the method according to any one of claims 17 to 28.

33. A chip, comprising a processor, configured to invoke a computer program from a memory and run the computer program, to enable a communication device in which the chip is installed to perform the method according to any one of claims 1 to 16 or the method according to any one of claims 17 to 28.

34. A computer program product, wherein the computer program product comprises a computer program; and when the computer program is executed by a processor, the method according to any one of claims 1 to 16 is performed, or the method according to any one of claims 17 to 28 is performed.

35. A system, comprising an apparatus configured to perform the method according to any one of claims 1 to 16 and an apparatus configured to perform the method according to any one of claims 17 to 28.

FIG. 1

FIG. 2

FIG. 3

400

| Network device | First terminal device | Second terminal device |
|---|---|---|

S410: Send a measurement type

S420a: Send a first measurement requirement, where the first measurement requirement is used by a plurality of terminal devices to determine whether to perform sensing parameter measurement on a target object

S420b: Send the first measurement requirement

S430a: Receive the first measurement requirement, and determine, based on the first measurement requirement, whether to perform the sensing parameter measurement on the target object

S430b: Receive the first measurement requirement, and determine, based on the first measurement requirement, whether to perform the sensing parameter measurement on the target object

S440a: When determining that the sensing parameter measurement needs to be performed, obtain a first sensing parameter measurement result of the target object

S440b: When determining that the sensing parameter measurement needs to be performed, obtain a second sensing parameter measurement result of the target object

S450a: Send the first sensing parameter measurement result

S450b: Send the second sensing parameter measurement result

S460: Send all the sensing parameter measurement results

FIG. 4

500

| Network device | First terminal device | Second terminal device |

S510: Send a measurement type

S520a: Send a first measurement requirement, where the first measurement requirement is used by a plurality of terminal devices to determine whether to perform sensing parameter measurement on a target object

S520b: Send the first measurement requirement

S530a: Send a data transmission requirement, where the data transmission requirement is used by a terminal device that performs sensing parameter measurement in the plurality of terminal devices to determine whether to send a sensing parameter measurement result

S530b: Send the data transmission requirement

TO FIG. 5B

FIG. 5A

CONT. FROM FIG. 5A

S540a: Receive the first measurement requirement, and determine, based on the first measurement requirement, whether to perform the sensing parameter measurement on the target object

S540b: Receive the first measurement requirement, and determine, based on the first measurement requirement, whether to perform the sensing parameter measurement on the target object

S550a: When determining that the sensing parameter measurement needs to be performed, obtain a first sensing parameter measurement result of the target object

S550b: When determining that the sensing parameter measurement needs to be performed, obtain a second sensing parameter measurement result of the target object

S560a: Determine, based on the data transmission requirement, whether to upload the first sensing parameter measurement result to the network device

S560b: Determine, based on the data transmission requirement, whether to upload the second sensing parameter measurement result to the network device

S570a: Send the first sensing parameter measurement result

S570b: Send the second sensing parameter measurement result

S580: Send all the sensing parameter measurement results

FIG. 5B

600

```
┌─────────────┐          ┌─────────────┐          ┌──────────────┐
│   Network   │          │First terminal│          │    Second    │
│   device    │          │   device     │          │terminal device│
└─────────────┘          └─────────────┘          └──────────────┘
```

S610: Send a first measurement requirement

S620a: Send a second measurement requirement

S620b: Send a second measurement requirement

S630a: Determine, based on the first measurement requirement and the second measurement requirement that is sent by the first terminal device, whether to send the first measurement requirement to the first terminal device

S630b: Send the first measurement requirement, where the first measurement requirement is used by a plurality of terminal devices to determine whether to perform sensing parameter measurement on a target object

S630c: Determine, based on the first measurement requirement and the second measurement requirement that is sent by the second terminal device, whether to send the first measurement requirement to the second terminal device

S630d: Send the first measurement requirement

TO FIG. 6B

FIG. 6A

CONT. FROM FIG. 6A

S640a: Send a data transmission requirement, where the first measurement requirement is used by the plurality of terminal devices to determine whether to perform the sensing parameter measurement on the target object

S640b: Send the data transmission requirement

S650a: Receive the first measurement requirement, and determine, based on the first measurement requirement, whether to perform the sensing parameter measurement on the target object

S650b: Receive the first measurement requirement, and determine, based on the first measurement requirement, whether to perform the sensing parameter measurement on the target object

S660a: When determining that the sensing parameter measurement needs to be performed, obtain a first sensing parameter measurement result of the target object

S660b: When determining that the sensing parameter measurement needs to be performed, obtain a second sensing parameter measurement result of the target object

S670a: Determine, based on the data transmission requirement, whether to upload the first sensing parameter measurement result to the network device

S670b: Determine, based on the data transmission requirement, whether to upload the second sensing parameter measurement result to the network device

S680a: Send the first sensing parameter measurement result

S680b: Send the second sensing parameter measurement result

S690: Send all the sensing parameter measurement results

FIG. 6B

Terminal device 700

Antenna 1    Antenna 2

Wireless communication module
Wi-Fi/Bluetooth/ZigBee/Wireless data
transmission module
[750]

Internal
memory [721]

External
memory
interface [720]

Processor

[710]

USB interface
[730]

Charging
input

Charging
management
module
[740]

Power management
module
[741]

Battery [742]

FIG. 7

Communication apparatus 800

Processing unit 810

Communication unit 820

Storage unit 830

FIG. 8

EP 4 521 812 A1

FIG. 9

| Processor 1010 |
| Interface circuit 1020 |

FIG. 10

42

## INTERNATIONAL SEARCH REPORT

| International application No. |
| --- |
| **PCT/CN2023/089524** |

| A. | CLASSIFICATION OF SUBJECT MATTER |
| --- | --- |

H04W24/10(2009.01)i; H04B17/382(2015.01)i

According to International Patent Classification (IPC) or to both national classification and IPC

| B. | FIELDS SEARCHED |
| --- | --- |

Minimum documentation searched (classification system followed by classification symbols)

    IPC: H04W,H04B

Documentation searched other than minimum documentation to the extent that such documents are included in the fields searched

Electronic data base consulted during the international search (name of data base and, where practicable, search terms used)

    3GPP, CJFD, CNTXT, DWPI, ENTXT, VEN, WPABS: 参加, 参与, 测量, 测速, 成像, 符合, 感知, 需求, 满足, 能力, 确定, 群智, 筛选, 设备, 条件, 通信, 选取, 选择, 一体化, Capability, communication, ICAS, integrated, ISAC, ISAR, sensing, select +, requirement+, integrated sensing

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 106534239 A (SHANGHAI JIAO TONG UNIVERSITY et al.) 22 March 2017 (2017-03-22)<br>    description, paragraphs [0002] and [0024]-[0176] | 1-35 |
| A | CN 109447489 A (EAST CHINA JIAOTONG UNIVERSITY) 08 March 2019 (2019-03-08)<br>    entire document | 1-35 |
| A | CN 103581939 A (NOKIA CORP.) 12 February 2014 (2014-02-12)<br>    entire document | 1-35 |
| A | CN 114222363 A (COMBA NETWORK SYSTEMS CO., LTD.) 22 March 2022 (2022-03-22)<br>    entire document | 1-35 |
| A | US 2022141804 A1 (HUAWEI TECHNOLOGIES CO., LTD.) 05 May 2022 (2022-05-05)<br>    entire document | 1-35 |
| A | HUAWEI et al. "S1-221104 New use case: Sensing for Smart Transportation"<br>*3GPP TSG-SA WG1 Meeting #98e*, 29 April 2022 (2022-04-29),<br>    entire document | 1-35 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 June 2023** | **20 June 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/089524** |

| Patent document cited in search report | | | Publication date (day/month/year) | Patent family member(s) | | | Publication date (day/month/year) |
| --- | --- | --- | --- | --- | --- | --- | --- |
| CN | 106534239 | A | 22 March 2017 | None | | | |
| CN | 109447489 | A | 08 March 2019 | None | | | |
| CN | 103581939 | A | 12 February 2014 | US | 2015324704 | A1 | 12 November 2015 |
| | | | | WO | 2014016471 | A1 | 30 January 2014 |
| CN | 114222363 | A | 22 March 2022 | None | | | |
| US | 2022141804 | A1 | 05 May 2022 | WO | 2022095824 | A1 | 12 May 2022 |

**EP 4 521 812 A1**

REFERENCES CITED IN THE DESCRIPTION

**Patent documents cited in the description**

- CN 202210522774